# EUROPEAN PATENT SPECIFICATION

(11) **EP 2 105 882 B1**
(45) Date of publication and mention of the grant of the patent: **04.01.2012**
(21) Application number: 09250869.6
(22) Date of filing: 26.03.2009
(51) Int. Cl.: G06T 7/00

(54) **Image processing apparatus, image processing method, and program**
Bildverarbeitungsvorrichtung, Bildverarbeitungsverfahren und Programm
Appareil de traitement d'images numériques, procédé de traitement d'images numériques et programme

(30) Priority: 28.03.2008 JP 2008085446
(43) Date of publication of application: 30.09.2009
(73) Proprietor: FUJIFILM Corporation, Minato-ku Tokyo (JP)
(72) Inventor: Masuda, Tomonori, Kurokawa-gun Miyagi (JP)
(74) Representative: Stevens, Jason Paul

(56) References cited:
- US-A1- 2003 118 245
- GORDILLO J L: "CAICOU: the color image analysis" TRAITEMENT DU SIGNAL FRANCE, vol. 4, no. 3, 1987, pages 217-228, XP002535170 ISSN: 0765-0019

## Description

The present invention relates to an image processing apparatus that generates a stereo image data set from a pair of image data sets obtained by photography of a subject from two viewpoints. More specifically, the present invention relates to an image processing method for the case where a pair of image data sets used to generate a stereo image data set represents colour images.

Recently, image processing apparatuses have been proposed for generating a stereo image data set from a pair of image data sets obtained by photography of a subject from two viewpoints. Methods adopting stereo matching have also been known as a method of generating a stereo image data set. In stereo matching, a three-dimensional shape of a subject is estimated by identifying corresponding points that are common to a pair of image data sets obtained in photography and by calculating distances to the corresponding points according to triangulation.

An image processing apparatus using stereo matching is known as an image processing apparatus that enables highly reliable stereo image data calculation (see US 7065245). In this apparatus, colour images each comprising grayscale images of a plurality of colours are used as a pair of image data sets, and a parallax in each of the colours is calculated by carrying out stereo matching on the grayscale images of the same colour. A total parallax is then calculated by a blending process using a product-sum operation based on a colour of a target in each image region, to enable highly reliable stereo image data calculation.

Furthermore, another image processing apparatus aiming for improvement in distance detection accuracy has also been proposed (see Japanese Unexamined Patent Publication No. 2005-346393). In this apparatus, colour images are used in a manner similar to that by the apparatus described above, and a degree of matching is calculated for each colour between a predetermined region in one of image data sets and each region in the other image data set. The degrees of matching are combined to find a total degree of matching, and a parallax is calculated based on the total degree of matching. In this manner, accuracy in distance detection can be improved.

A further image processing apparatus is described in the article "CAICOU: l'Analyse d'Image Couleur" by José-Luis Gordillo, from "Traitement du Signal", Volume 4, no. 3, 1987, pages 217-228.

However, in the image processing apparatus described in US 7065245, the time necessary for calculating the distance becomes longer, since the distance is calculated for the grayscale images of each colour. In the image processing apparatus described in Japanese Unexamined Patent Publication No. 2005-346393, the time necessary for distance calculation is also long, since the images of all the colours are used for the parallax calculation.

The present invention has been conceived based on consideration of the above circumstances, and an object of at least the preferred embodiments of the present invention is to provide an image processing apparatus, an image processing method, and a program that enable fast and accurate acquisition of distance data based on colour images.

An image processing apparatus according to a first aspect of the present invention is an image processing apparatus that generates a stereo image data set by calculating a distance to a subject according to a pair of image data sets each comprising grayscale images of a plurality of colours and obtained by photographing the subject from two viewpoints, the apparatus comprising:
image input means for inputting the pair of image data sets;
selection means for selecting the grayscale image of one of the colours that is most appropriate for calculating the distance among the grayscale images of the plurality of colours constituting at least one of the inputted image data sets; and
distance calculation means for calculating the distance, based on the grayscale image of the colour selected by the selection means and the grayscale image of the colour in the other image data set;
wherein the selection means calculates the number of pixels having predetermined intensity levels at predetermined intervals in each of the grayscale images of the colours and selects the grayscale image having a largest number of the pixels having been calculated, or the selection means (15) extracts an edge in each of the grayscale images of the colours, calculates the number of pixels of the , extracted edge, and selects the grayscale image having a largest number of the pixels having been calculated.

In the image processing apparatus of the present invention, the selection means may calculate a difference between a maximum intensity level gray level and a minimum intensity level in each of the grayscale images of the colours so that the selection means can select the grayscale image having a largest value of the intensity level difference.

In the image processing apparatus of the present invention, the selection means may calculate the number of pixels having predetermined intensity levels at predetermined intervals in each of the grayscale images of the colours so that the selection means can select the grayscale image having a largest number of the pixels having been calculated.

In the image processing apparatus of the present invention, the selection means may extract an edge in each of the grayscale images of the colours and calculate the number of pixels of the extracted edge. In this case, the selection means can select the grayscale image having a largest number of the pixels having been calculated.

Furthermore, the selection means in the image processing apparatus of the present invention may calculate the number of the pixels in each pixel row or pixel column at predetermined intervals.

Moreover, the selection means in the image processing apparatus of the present invention may extract an edge in each of the grayscale images of the colours and calculate how many times pixel rows or pixel columns at predetermined intervals intersect with the edge. The selection means in this case can select the grayscale image having a largest number of the times.

In the image processing apparatus of the present invention, the image input means may comprise two cameras.

Alternatively, the image input means in the image processing apparatus of the present invention may comprise a multiple-lens camera having two optical systems.

In this case, it is preferable for the multiple-lens camera to have imaging systems of multiple-plane configuration. The multiple-plane configuration refers to a configuration wherein a plurality of optical systems are installed and a plurality of imaging devices corresponding to an optical axis of each of the systems are also positioned. In the multiple-plane configuration, signal processing is carried out on signals outputted from the respective imaging devices, and one final signal of a photographed image is outputted from each of the systems.

An image processing method of the present invention is an image processing method that generates a stereo image data set by calculating a distance to a subject according to a pair of image data sets each comprising grayscale images of a plurality of colours and obtained by photographing the subject from two viewpoints, the method comprising the steps of:
inputting the pair of image data sets;
selecting the grayscale image of one of the colours that is most appropriate for calculating the distance among the grayscale images of the plurality of colours constituting at least one of the inputted image data sets, by calculating the number of pixels having predetermined intensity levels at predetermined intervals in each of the grayscale images of the colours and selecting the grayscale image having a largest number of the pixels having been calculated, or extracting an edge in each of the grayscale images of the colours, calculating the number of pixels of the extracted edge, and selecting the grayscale image having a largest number of the pixels having been calculated; and
calculating the distance, based on the grayscale image of the selected colour and the grayscale image of the colour in the other image data set.

According to the image processing apparatus, the image processing method, and the program of the present invention, the grayscale image of one of the colours that is most appropriate for calculation of the distance is selected from the grayscale images of the plurality of colours in at least one of the image data sets inputted as the pair, and the distance is calculated from the grayscale image of the selected colour and the corresponding grayscale image in the other image data set. Therefore, by calculating the distance from the grayscale images of only one of the colours that is most appropriate for the calculation, the distance data can be calculated with high accuracy, and the time necessary for the calculation can be shortened.

Preferred embodiments of the invention will now be described by way of example only and with reference to the accompanying drawings, in which:
Figure 1 is a block diagram showing the functional configuration of an image processing apparatus of a first embodiment of the present invention;
Figure 2 is a flow chart showing a flow of image processing in the image processing apparatus in Figure 1;
Figure 3 is a flow chart showing first image selection processing by an image selection unit;
Figure 4A is a flow chart showing second image selection processing by the image selection unit;
Figure 4B is a flow chart showing counting processing;
Figure 5 shows an example of intensity level distribution in a grayscale, image and a method of counting pixels therein;
Figure 6 shows another example of intensity level distribution in a grayscale image and a method of counting pixels therein;
Figure 7 is a flow chart showing third image selection processing by the image selection unit;
Figure 8 shows an example of a colour image;
Figure 9 is a flow chart showing fourth image selection processing by the image selection unit;
Figure 10 shows an example of counting the numbers of times of edge intersection in grayscale images wherein edges have been extracted;
Figure 11 is a block diagram showing the functional configuration of an image processing apparatus of a second embodiment of the present invention;
Figure 12 is a flow chart showing a flow of image processing by the image processing apparatus in Figure 11;
Figure 13A is a flow chart showing a part of first region division and image selection processing (part 1);
Figure 13B is a flow chart showing another part of the first region division and image selection processing (part 2);
Figure 13C is a flow chart showing still another part of the first region division and image selection processing (part 3);
Figure 13D is a flow chart showing yet another part of the first region division and image selection processing (part 4);
Figure 14 shows an example of a region division and image selection method carried out by a region division unit and an image selection unit;
Figure 15A is a flow chart showing a part of second region division and image selection processing (part 1);
Figure 15B is a flow chart showing another part of the second region division and image selection processing (part 2);
Figure 15C is a flow chart showing still another part of the second region division and image selection processing (part 3);
Figure 15D is a flow chart showing yet another part of the second region division and image selection processing (part 4);
Figure 16 is a block diagram showing the functional configuration of an image processing apparatus of a third embodiment of the present invention;
Figures 17 is a flow chart showing a flow of image processing by the image processing apparatus in Figure 16;
Figure 18 is a block diagram showing the functional configuration of an image processing apparatus of a fourth embodiment of the present invention;
Figures 19 is a flow chart showing a flow of image processing by the image processing apparatus in Figure 18;
Figure 20 is a block diagram showing an example of the configuration of an image input unit; and
Figure 21 is a block diagram showing another example of the configuration of the image input unit.

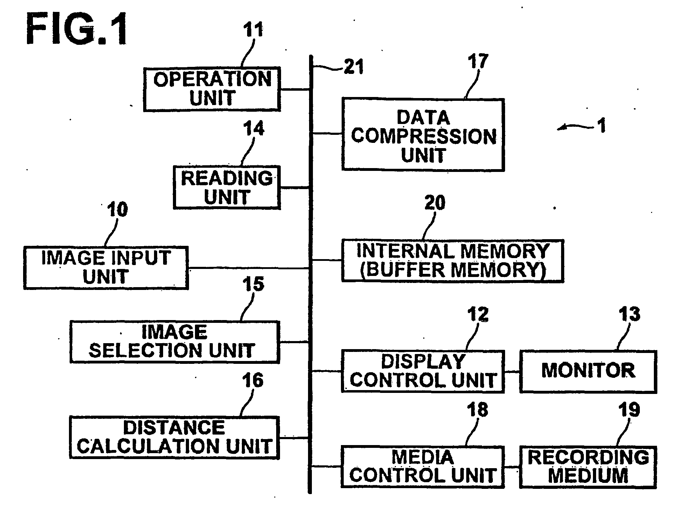

Hereinafter, embodiments of the present invention will be described with reference to the accompanying drawings. Figure 1 is a block diagram showing the functional configuration of an image processing apparatus 1 as a first embodiment of the present invention. As shown in Figure 1, the image processing apparatus 1 in this embodiment comprises an image input unit (image input means) 10, an operation unit 11, a display control unit 12, a monitor 13, a reading unit 14, an image selection unit (selection means) 15, a distance calculation unit (distance calculation means) 16, a data compression unit 17, a media control unit 18, a recording medium (recording means) 19, an internal memory 20, and the like, all of which carry out transmission and reception of various kinds of signals and data via a data bus 21.

The image input unit 10 is to input a pair of image data sets representing a reference image A and a matching image B both of which are colour images obtained by photographing a subject from two different viewpoints and comprise grayscale images of R, G, and B colours. Either one of the image data sets can represent the reference image A. In addition, although the number of the image data sets to be inputted is two in this embodiment, a plurality of image data sets such as three or four image data sets may be inputted as long as the data sets represent so-called parallax images obtained by photography from different viewpoints. In this case, one of the image data sets represents the reference image A while the remaining image data sets represent the matching images B.

The operation unit 11 comprises an operation mode switch, a Menu/OK button, an Up/Down lever, Right and Left buttons, a Back button, a Display Change button, a shutter release button, a power switch, and the like. A user operates the operation unit 11 for various kinds of setting.

The display control unit 12 can display on the monitor 13 not only an image inputted by the image input unit 10 but also a stereo image of the subject generated according to distance data, that is, depth data to each part of the subject calculated by the distance calculation unit 16 as will be described later. In addition, the display control unit 12 display on the monitor 13 a stereo image based on a stereo image data set recorded in the recording medium 19 and read by the media control unit 18 as will be described later.

The monitor 13 is to display a plane image or a stereo image via the display control unit 12, as well as various kinds of setting menus or the like that are operable and set with use of the operation unit 11.

The reading unit 14 reads the grayscale images of R, G, and B colours constituting the image data sets inputted by the image input unit 10, and reads out all values of pixels therein. The reading unit 14 obtains information such as intensity levels for all the pixels by carrying out known conversion processing on the pixel values having been read. In this embodiment, the intensity levels are calculated from the pixel values having been read. However, the pixel values themselves may be used as the intensity levels.

Among grayscale images Ar, Ag, and Ab of the three colours R, G, and B constituting the reference image A corresponding to one of the image data sets read by the reading unit 14 (hereinafter, the grayscale images are simply referred to as R, G, and B grayscale images as well), the image selection unit 15 selects the grayscale image of one of the colours that is most appropriate for distance calculation by the distance calculation unit 16. How the grayscale image is selected by the image selection unit 15 will be described later.

The distance calculation unit 16 calculates the distance to each part of the subject according to the grayscale image of the colour selected by the image selection unit 15 and the grayscale image of the same colour of the matching image, that is, from a pair of the grayscale images of the selected colour. Through correlation operations, the distance calculation unit 16 identifies so-called corresponding points such as an edge or segment that is common to the pair of grayscale images and can be subjected to a known stereo matching method, and finds a parallax based on information on positions of the corresponding points. The distance calculation unit 16 then calculates the distance to the corresponding points, that is, the distance to each part of the subject, according to triangulation using the parallax.

In order to detect the corresponding points, a so-called area-based matching method or a so-called feature-based matching method can be used, for example. In area-based matching, a pixel block Wa comprising pixels is calculated from the reference image A, and the pixel block A is moved in the matching image B to calculate a matching evaluation value (a correlation degree) regarding a gray level pattern or the like. A block Wb corresponding to the pixel block Wa is detected in the matching image B in this manner. In feature-based matching, feature points such as an edge or segment is found in advance in the reference image A and in the matching image B, and the corresponding points are detected according to a correlation degree of the feature points between the reference image A and the matching image B. For calculation of a matching degree evaluation value (the correlation degree), a known technique such as a sum of absolute values of differences between pixels or a square sum of the differences can be used, for example.

Since the distance calculation unit 16 calculates the distance regarding the pair of grayscale images of the selected colour, the time necessary therefor can be shortened.

The data compression unit 17 compresses the calculated distance data, and the compressed distance data are recorded in the recording medium 19 via the media control unit 18.

The media control unit 18 carries out reading or writing of the distance data from or in the recording medium 19.

The recording medium (recording means) 19 is a recording medium that can store various kinds of data such as the distance data, and comprises a magnetic or optical recording medium or a semiconductor memory, for example.

The internal memory 20 stores various kinds of constants set in the image processing apparatus 1, programs, and the like, and also functions as a buffer memory for storming the image data sets inputted by the image input unit 10 and the distance data calculated by the distance calculation unit 16, for example.

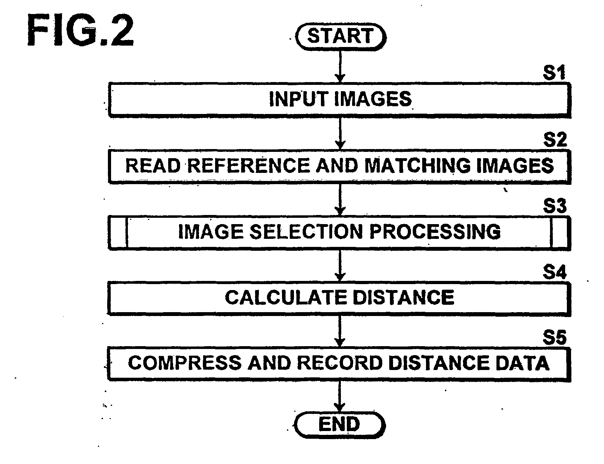

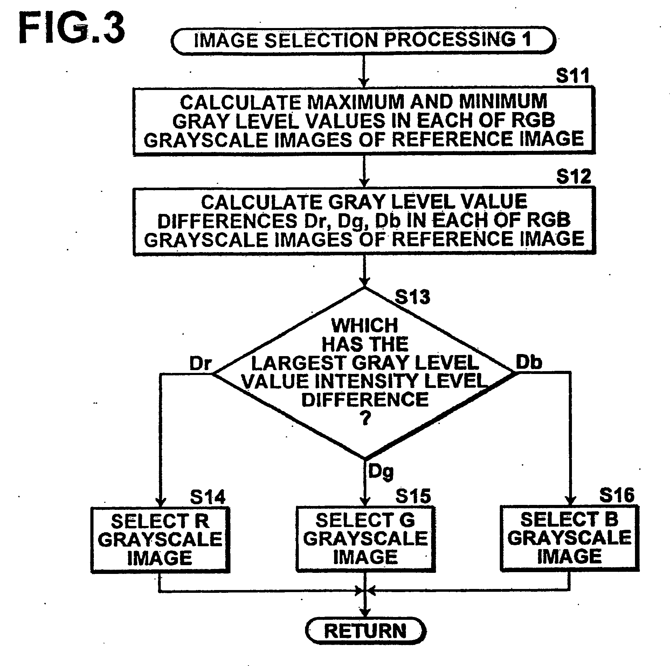

The configuration of the image processing apparatus 1 in this embodiment has been described above. The image processing carried out by the image processing apparatus 1 will be described next. Figure 2 is a flow chart showing a flow of the image processing carried out by the image processing apparatus 1, and Figure 3 is a flow chart showing image selection processing by the image selection unit 15.

As shown in Figure 2, the image input unit 10 of the image processing apparatus in this embodiment inputs the pair of image data sets, that is, the data representing the reference image A and the matching image B (Step S1), and the reading unit 14 reads the R grayscale image Ar, the G grayscale image Ag, and the B grayscale image Ab constituting the reference image A and an R grayscale image Br, a G grayscale image Bg, and a B grayscale image Bb constituting the matching image B, to read the pixel values such as the intensity levels (Step S2).

The image selection unit 15 then carries out the image selection processing for selecting the grayscale image of one of the colours that is most appropriate for the distance calculation by the distance calculation unit 16 from the grayscale images Ar, Ag, and Ab of R, G, and B colours (Step S3).

As shown in Figure 3, in image selection processing 1 carried out by the image selection unit 15, a maximum intensity level and a minimum intensity level are calculated for each of the grayscale images Ar, Ag, and Ab of the R, G, and B colours of the reference image A (Step S11), and differences Dr, Dg, and Db between the maximum and minimum intensity levels therein are calculated (Step S12).

The image selection unit 15 judges a largest value among the intensity level difference values (Step S13). In the case where the largest value has been judged to be the intensity level difference Dr (Step S13; Dr), the image selection unit 15 selects the R grayscale image Ar (Step S14). In the case where the largest value has been judged to be the intensity level difference Dg (Step S13; Dg), the image selection unit 15 selects the G grayscale image Ag (Step S15). In the case where the largest value has been judged to be the intensity level difference Db (Step S13; Db), the image selection unit 15 selects the B grayscale image Ab (Step S16). In this manner, the image selection unit 15 carries out the image selection processing 1.

A grayscale image having a large difference in intensity levels generally has a higher possibility of having a characteristic that is necessary for distance calculation than a grayscale image having a small difference in intensity levels. In other words, the corresponding points such as an edge used to calculate the distance are points representing a sharp changed in intensity levels, that is, points having a large difference in intensity values. Therefore, a grayscale image having a large difference in intensity levels has a higher possibility of having intensity level distribution of detectable corresponding points. Consequently, by selecting the grayscale image having a large difference in the intensity levels in the above manner, accuracy of detecting the corresponding points, that is, accuracy of the subject can be improved, and the distance data can be obtained with high accuracy.

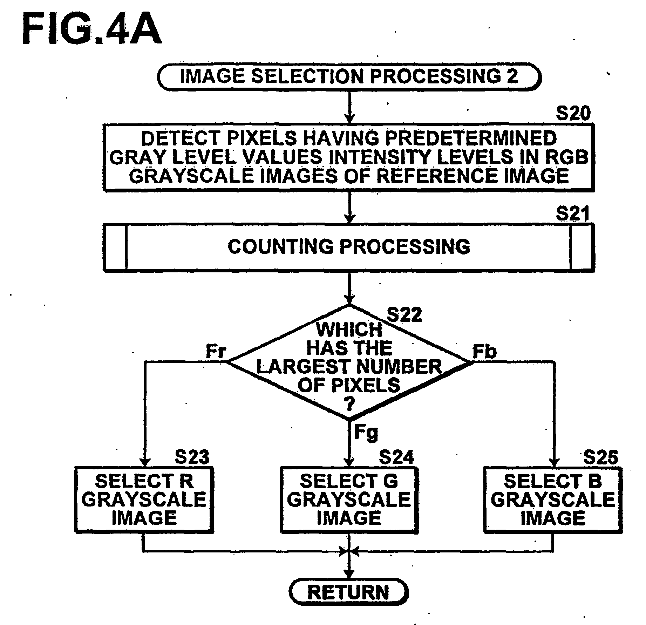

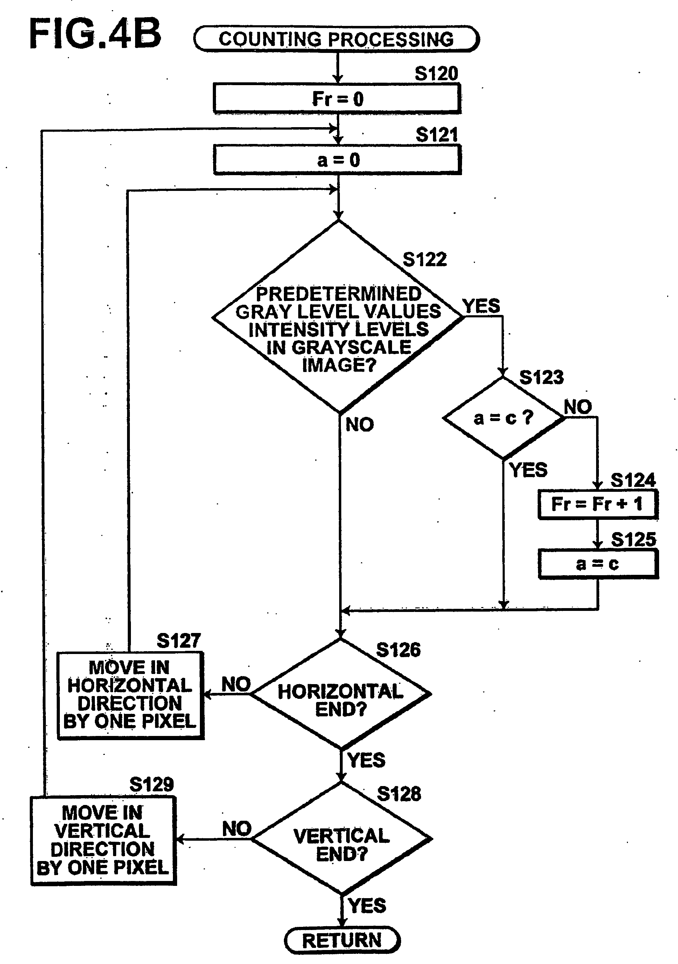

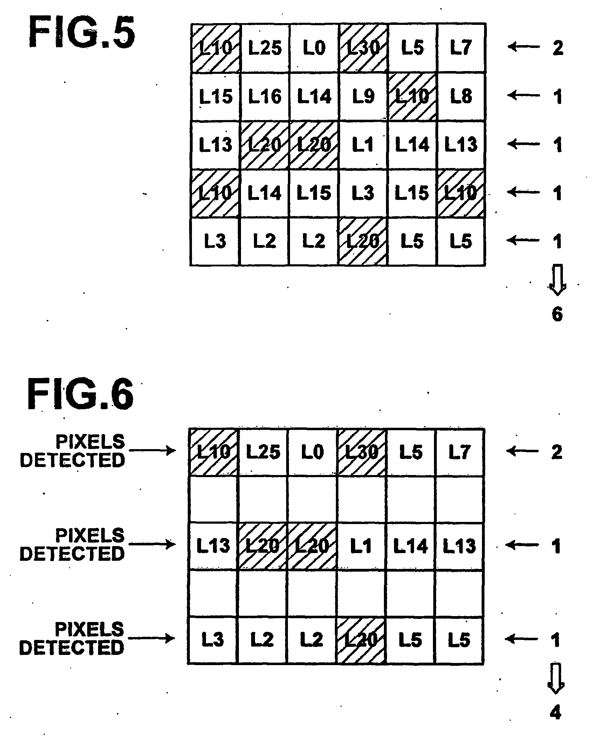

The image selection by the image selection unit 15 may adopt another method. Second image selection processing 2 by the image selection unit 15 will be described next. Figure 4A is a flow chart showing the second image selection processing 2, and Figure 4B is a flow chart showing counting processing. Figure 5 shows an example of intensity level distribution and a pixel counting method in a grayscale image while Figure 6 shows another example of intensity level distribution and a pixel counting method in a grayscale image.

As shown in Figure 4A, the image selection unit 15 detects pixels having predetermined intensity levels C (such as L10, L20, L30, and so on) at predetermined intervals such as every 10 values, in each of the grayscale images Ar, Ag, and Ab (Step S20). As shown in Figure 5, in the detection of the pixels, judgment is made as to whether an intensity level L of each of the pixels in each of the grayscale images Ar, Ag, and Ab is one of the predetermined levels C, and the pixels having the predetermined levels C shown as hatched areas in Figure 5 are detected.

The image selection unit 15 then counts the numbers of the pixels detected at Step S20 in the respective grayscale images. Ar, Ag and Ab (the numbers are denoted by Fr, Fg, and Fb), in the manner described below (Step S21).

In the counting processing, as shown in Figure 4B, 0 is initially assigned to Fr to initialize Fr in the case of the grayscale image Ar (Step S120), and 0 is assigned to a to initialize a at a pixel at one end of each pixel row (or pixel column) (Step S121). Whether any one of the predetermined intensity levels C exists in the grayscale image Ar is then judged at each of the pixels as a target of processing (Step S122). If any one of the values C exists (Step S122; YES), whether a = c is judged (Step S123). If a is not c (Step S123; NO), 1 is added to Fr (Step S124), and c is assigned to a (Step S125). The processing flow then goes to Step S126.

In the case where none of the predetermined intensity levels C have been judged to exist at Step S122 (Step S122; NO), and in the case where a = c at Step S123 (Step S123; YES), the processing flow also goes to Step S126 to judge whether the processing target pixel is located at a horizontal end (Step S126).

In the case where the pixel has been judged not to be at a horizontal end (Step S126; NO), the target of processing is moved in the horizontal direction by one pixel (Step S127). The processing flow then returns to Step S122, and the processing from Step S122 is repeated. In the case where the target pixel has been judged to be located at a horizontal end (Step S126; YES), whether the target pixel is located at a vertical end is judged (Step S128).

In the case where the pixel has been judged not to be located at a vertical end (Step S128; NO), the target of processing is moved in the vertical direction by one pixel (Step S129). The processing flow then returns to Step S121 to repeat the processing therefrom. In the case where the pixel has been judged to be located at a vertical end (Step S128; YES), the counting processing ends. The same counting processing is carried out for the grayscale images Ag and Ab.

In the counting processing described above, the pixels having the intensity levels C are counted as 2 for the first pixel row in the grayscale image shown in Figure 5, for example. The number of the pixels in the second to fifth pixel rows is counted as 1, 1, 1, and 1, respectively. Therefore, the number of the pixels in the grayscale image is 6 in total. The numbers Fr, Fg, and Fb of the pixels in the respective R, G, and B grayscale images constituting the reference image A are counted in this manner.

In this processing, the number of the pixels is counted for each of the pixel rows. However, as long as counting is carried out for all the pixels in the respective grayscale images Ar, Ag, and Ab, the manner of counting is not necessarily limited thereto, and can be changed appropriately.

The image selection unit 15 judges which of the numbers of the pixels having been counted is the largest (Step S22). In the case where the largest number of the pixels has been judged to be the number Fr (Step S22; Fr), the image selection unit 15 selects the R grayscale image Ar (Step S23). In the case where the largest number of the pixels has been judged to be the number Fg (Step S22; Fg), the image selection unit 15 selects the G grayscale image Ag (Step S24). In the case where the largest number of the pixels has been judged to be the number Fb (Step S22; Fb), the image selection unit 15 selects the B grayscale image Ab (Step S25). In this manner, the image selection unit 15 carries out the image selection processing 2.

A grayscale image with frequent change in intensity levels generally has a higher possibility of having a characteristic that is necessary for distance calculation than a grayscale image with little change in intensity levels. In other words, corresponding points of an edge or a region having a large intensity level gradient used for distance calculation are points at which intensity levels fluctuate. Therefore, a grayscale image having frequent change in intensity levels has a higher possibility of having intensity level distribution of detectable corresponding points. Consequently, by selecting the grayscale image having frequent change in intensity levels in the above manner, accuracy of detecting the corresponding points, that is, accuracy of the subject can be improved, and the distance data can be obtained with high accuracy.

In the above embodiment, the pixels having the predetermined intensity levels C are detected and counted as the numbers Fr, Fg, and Fb regarding all the pixels in the R, G, and B grayscale images Ar, AG, and Ab constituting the reference image A. However, as shown in Figure 6, the detection of the pixels having the predetermined intensity levels C may be carried out in pixel rows at predetermined intervals such as every other pixel row so that the numbers Fr, Fg, and Fb of the detected pixels can be counted accordingly. In this case, as shown in Figure 6, the number of the pixels in the first pixel row is 2 while the number of the pixels in the third and fifth rows is 1 and 1, respectively. Therefore, the number of the pixels is 4 in total for the grayscale image.

In the case where the correlation operations between the reference image A and the matching image B are carried out for each of the pixel rows by counting the numbers Fr, Fg, and Fb of the pixels in the pixel rows at the predetermined intervals, the grayscale image reflecting frequency of appearance of the pixels that can be corresponding points can be selected, and the image selection processing can be faster.

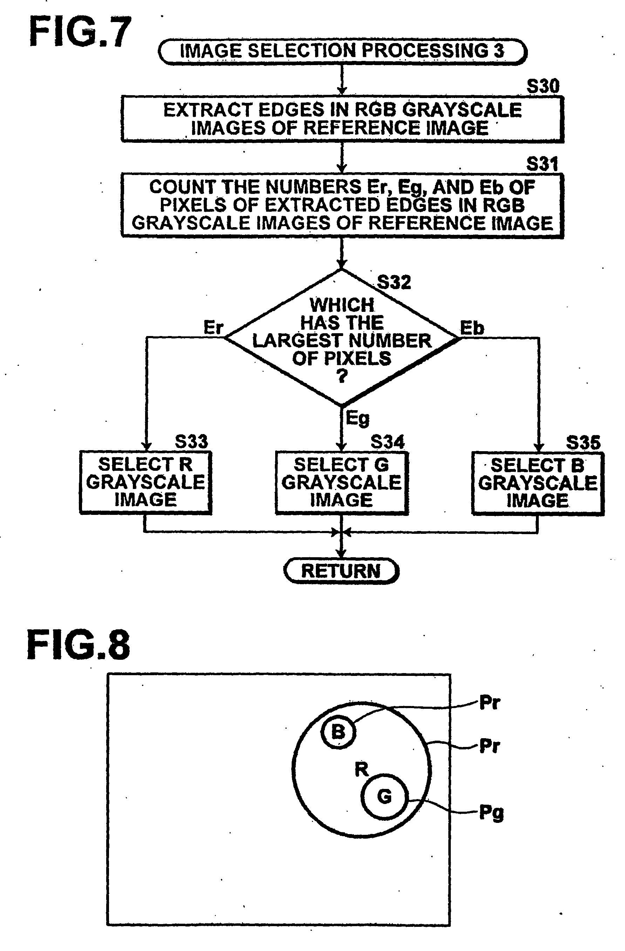

Third image selection processing 3 carried out by the image selection unit 15 will be described below. Figure 7 is a flow chart showing the third image selection processing 3 by the image selection unit 15, and Figure 8 shows an example of a colour image.

As shown in Figure 7, the image selection unit 15 extracts edges (contours) in each of the R, G, and B grayscale images Ar, Ag, and Ab constituting the reference image A (Step S30). For edge extraction, a generally used known method can be adopted.

The image selection unit 15 counts the numbers of pixels of the edges extracted at Step S30 for each of the grayscale images Ar, Ag, and Ab, that is, the numbers of the pixels corresponding to the edges and denoted by Er, Eg, and Eb, respectively (Step S31).

The image selection unit 15 judges a largest number among the numbers of the counted pixels (Step S32). In the case where the largest number has been judged to be Er (Step S32; Er), the image selection unit 15 selects the R grayscale image Ar (Step S33). In the case where the largest number has been judged to be Eg (Step S32; Eg), the image selection unit 15 selects the G grayscale image Ag (Step S34). In the case where the largest number has been judged to be Eb (Step S32; Eb), the image selection unit 15 selects the B grayscale image Ab (Step S35). In this manner, the image selection unit 15 carries out the image selection processing 3.

For example, in the case of a colour image P having a red object Pr, a green object Pg, and a blue object Pb whose sizes decrease in this order as shown in Figure 8, if the numbers Er, Eg and Eb of the pixels corresponding to edges are counted in each R, G, and B grayscale image Pr, Pg, and Pb, the number Er in the R grayscale image Pr is the largest. In other words, the larger the number of the pixels is, the more the edges have been extracted. Therefore, correlation becomes higher at more pixels between the reference image A and the matching image B, which enables easier detection of the corresponding points. Therefore, by selecting the grayscale image having the largest number of the pixels corresponding to the edges in the above manner, accuracy of detection of the corresponding points, that is, accuracy of the subject can be improved, and the distance data can be obtained with high accuracy.

In this embodiment, the numbers Er, Eg, and Eb of the pixels corresponding to the edges are counted for all the pixels in each of the R, G, and B grayscale images Ar, Ag, and Ab constituting the reference image A. However, as in the second image selection processing, the numbers Er, Eg, and Eb of the pixels may be counted in pixel rows at predetermined intervals such as at every other row as shown in Figure 6. In the case where the correlation operations between the reference image A and the matching image B are carried out for each of the pixel rows after counting the numbers Er, Eg, and Eb of the pixels in the pixel rows at the predetermined intervals, the grayscale image reflecting the frequency of appearance of the edges that can be the corresponding points can be selected, and the image processing can be carried out faster.

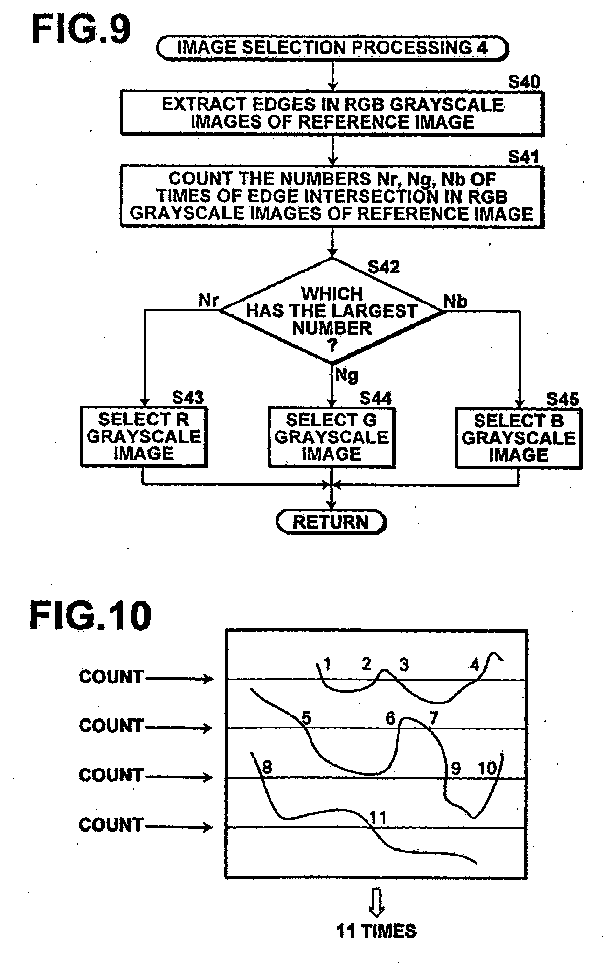

Fourth image selection processing 4 carried out by the image selection unit 15 will be described next. Figure 9 is a flow chart showing the image selection processing 4 by the image selection unit 15, and Figure 10 shows an example of counting the numbers of times of edge intersection in a grayscale image wherein edges have been extracted.

As shown in Figure 9, the image selection unit 15 extracts the edges (contours) regarding the R, G, and B grayscale images Ar, Ag, and Ab of the reference image A (Step S40). The edges are extracted by using a generally used known technique.

The image selection unit 15 then counts the numbers of times of edge intersection (the numbers are denoted by Nr, Ng, and Nb) in each of the grayscale images Ar, Ag, and Ab (Step S41).

The numbers Nr, Ng, and Nb of the times of edge intersection are counted in the same direction as the direction of the correlation operations between the reference image A and the matching image B at each line at predetermined intervals, by judging at each of the pixels whether each of the lines intersects with any one or more of the edges. How many times the edges intersect with the lines is counted as the numbers Nr, Ng, and Nb.

For example, in the case where the edges have been extracted as shown in Figure 10, whether the edges intersect is judged in the direction from left to right in every predetermined number of pixel rows in Figure 10. For the judgment, the grayscale image is binarized according to a known method so as to cause the extracted edges to be represented in black. Each of the edges is judged to intersect once in the case where the colour changes from white to black and then from black to white, and 1 is added to the corresponding one of the numbers of the times. In the example shown in Figure 10, the number of the times is 4 in the uppermost pixel row, and the number of the times is increased to 7, 10, and 11 toward the lower pixel rows. The number of the times is then 11 in the grayscale image shown in Figure 10. In this manner, the numbers Nr, Ng, and Nb of the times are counted.

As shown in Figure 9, after the numbers Nr, Ng, and Nb of the times are counted (Step S41), the image selection unit 15 judges which of the numbers of the times is the largest (Step S42). In the case where the number Nr has been judged to be the largest (Step S42; Nr), the image selection unit 15 selects the R grayscale image Ar (Step S43). In the case where the number Ng, has been judged to be the largest (Step S42; Ng), the image selection unit 15 selects the G grayscale image Ag (Step S44). In the case where the number Nb has been judged to be the largest (Step S42; Nb), the image selection unit 15 selects the B grayscale image Ab (Step S45). In this manner, the image selection unit 15 carries out the image selection processing 4.

In the case where the number of the extracted edges is large, a possibility generally becomes higher regarding existence of the pixels that can be corresponding points between the reference image A and the matching image B at the time of stereo matching, and the correlation operations thereof become easier. Therefore, by selecting the grayscale image wherein the edges intersect most frequently, that is, by selecting the grayscale image wherein the number of the edges that can be the corresponding points is the largest, accuracy of detection of the corresponding points, that is, accuracy of the subject can be improved and the distance data can be obtained with high accuracy. At the same time, the grayscale image reflecting the frequency of appearance of the edges as potential corresponding points can be selected.

As shown in Figure 2, after the image selection unit 15 has selected the grayscale image of one of the colours (Step S3), the distance calculation unit 16 calculates the distance to each part of the subject as has been described above, based on the grayscale image of the selected colour of the reference image A and the corresponding grayscale image of the matching image B (Step S4).

Once the distance calculation unit 16 has calculated and obtained the distance data (Step S4), the data compression unit 17 compresses the calculated distance data, and the media control unit 18 records the compressed distance data in the recording medium (Step S5), to end the image processing by the image processing apparatus 1.

As has been described above, according to the image processing apparatus 1 in the above embodiment, the grayscale image of the colour that is most appropriate for the distance calculation is selected from the R, G, and B grayscale images Ar, Ag, and Ab constituting the reference image A represented by one of the image data sets inputted as the pair, and the distance is calculated from the grayscale image of the selected colour and the corresponding grayscale image of the colour of the matching image B. Therefore, by calculating the distance based on only the grayscale images of the colour that is most appropriate for the distance calculation, the distance data can be calculated with high accuracy, and the time necessary for the calculation can be shortened. At this time, if reduction in the time necessary for the calculation is sought, the grayscale image of the colour that is most appropriate therefor does not need to be selected.

In this embodiment, the image selection unit 15 carries out the calculation of the intensity level differences Dr, Dg, and Db, or the numbers Fr, Fg, and Fb of the pixels having the predetermined intensity levels, or the numbers Er, Eg, and Eb of the pixels corresponding to the edges, or the numbers Nr, Ng, and Nb of the times of edge intersection, only for the reference image A. However, the present invention is not necessarily limited thereto, and the calculation may be carried out for the matching image B or for both the reference image A and the matching image B.

In this embodiment, the colour images are images each comprising the grayscale images of R, G, and B colours. However, the present invention is not necessarily limited thereto, and can be applied to colour images each comprising grayscale images of a plurality of colours such as 4 colours

In addition, the image processing apparatus of the present invention is an image processing apparatus that generates a stereo image data set by calculating a distance to a subject according to a pair of image data sets each comprising grayscale images of a plurality of colours and obtained by photographing the subject from two viewpoints, and the apparatus comprises:
image input means for inputting the pair of image data sets;
selection means for selecting the grayscale image of one of the colours that is most appropriate for calculating the distance to the subject among the grayscale images of the plurality of colours constituting at least one of the inputted image data sets; and
distance calculation means for calculating the distance from the grayscale image of the colour selected by the selection means and the grayscale image of the colour in the other image data set.

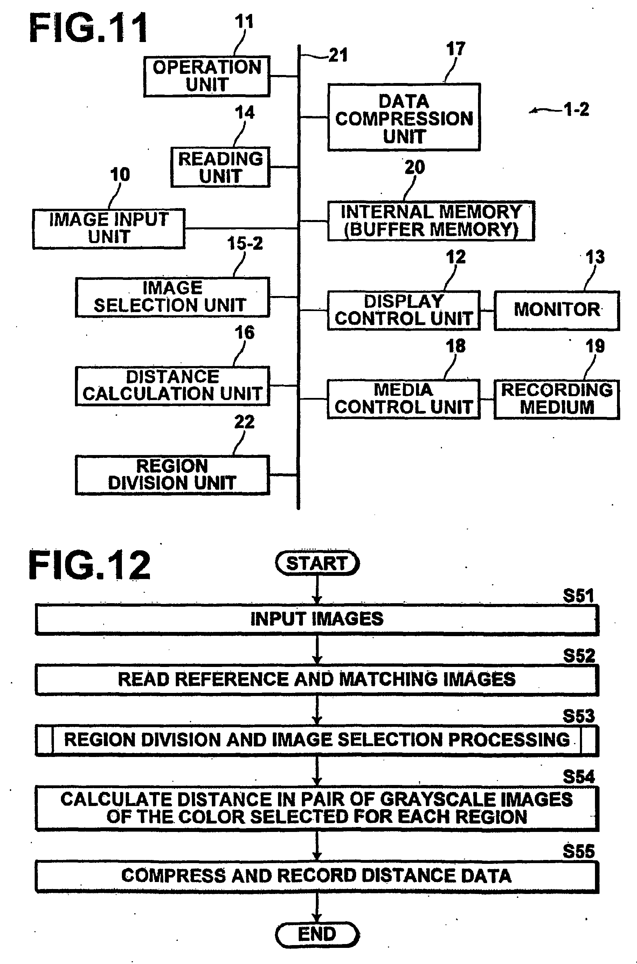

An image processing apparatus 1-2 as a second embodiment of the present invention will be described below with reference to the accompanying drawings. Figure 11 is a block diagram showing the functional configuration of the image processing apparatus 1-2 in the second embodiment. The same units as in the image processing apparatus 1 in Figure 1, which is the block diagram showing the function configuration thereof, have the same reference numerals in Figure 11. Therefore, detailed description thereof will be omitted, and only differences from the first embodiment 1 will be described below in detail.

The image processing apparatus 1-2 in this embodiment has a region division unit (image division means) 22 as shown in Figure 11, which is one of the differences from the image processing apparatus 1 in the first embodiment. The region division unit 22 divides each of the R, G, and B grayscale images Ar, Ag, and Ab of the reference image A into a plurality of predetermined regions.

In addition, an image selection unit 15-2 in this embodiment selects one of the R, G, and B grayscale images Ar, Ag, and Ab of the colour that is most appropriate for distance calculation, for each of the regions divided by the region division unit 22.

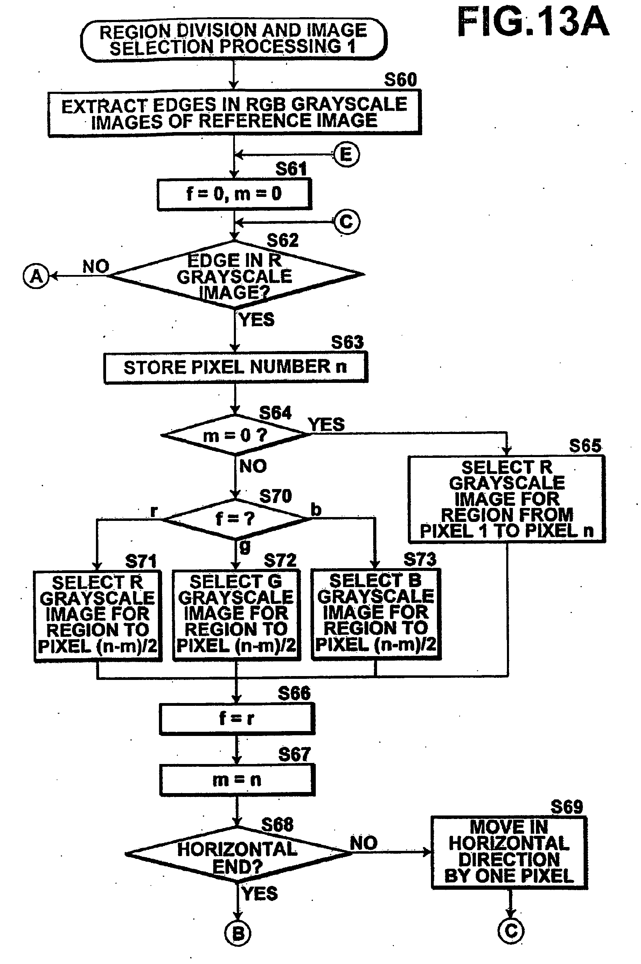

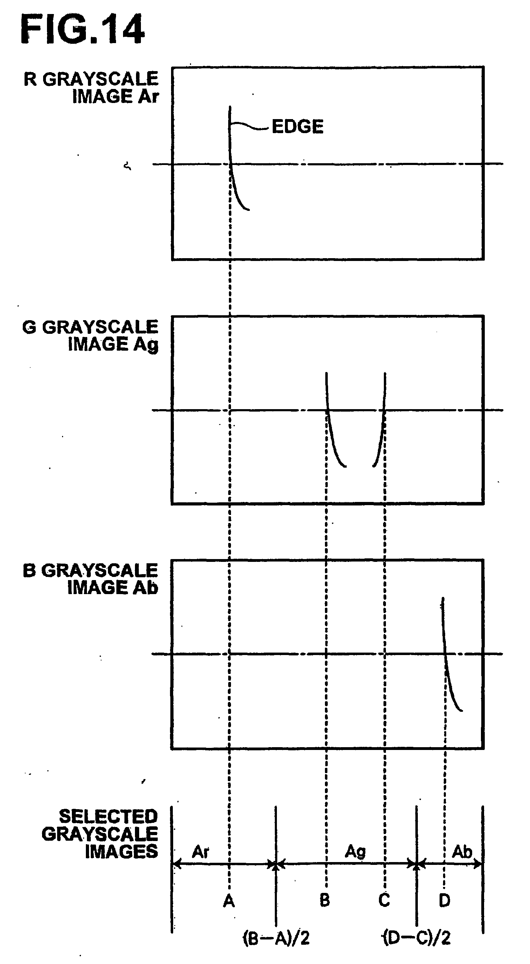

The configuration of the image processing apparatus 1-2 in this embodiment has been described above. The image processing carried out by the image processing apparatus 1-2 will be described next. Figure 12 is a flow chart showing a flow of the image processing by the image processing apparatus 1-2. Figures 13A to 13D are flow charts showing region division and image selection processing carried out by the region division unit 22 and the image selection unit 15-2. Figure 14 shows an example of a region division and image selection method carried out by the region division unit 22 and the image selection unit 15-2.

As shown in Figure 12, the image input unit 10 of the image processing apparatus 1-2 inputs the pair of image data sets representing the reference image A and the matching image B (Step S51). The reading unit 14 reads the R grayscale image Ar, the G grayscale image Ag, and the B grayscale image Ab constituting the reference image A and the R grayscale image Br, the G grayscale image Bg, and the B grayscale image Bb constituting the matching image B to read the pixel values as the intensity levels (Step S52).

The region division unit 22 then carries out the processing for division into the predetermined regions having pixels representing an edge, and the image selection unit 15-2 carries out image selection processing in each of the predetermined regions for selecting the grayscale image of one of the colours in which the edge has been extracted (Step S53).

As shown in Figure 13A, in the region division and image selection processing 1, edge extraction is carried out in each of the R, G, and B grayscale images Ar, Ag, and Ab of the reference image A (Step S60), and 0 is assigned to f and m for initialization thereof (Step S61). The region division unit 22 then judges whether an edge exists, at each of the pixels in each of the pixel rows (or columns), in order of the grayscale images Ar, Ag, and Ab, for example. More specifically, as shown in Figure 13A, whether an edge exists is firstly judged in the R grayscale image Ar (Step S62). In the case where the R grayscale image Ar has been judged to have an edge (Step S62; YES), number n of the corresponding pixel is stored (Step S63).

Whether m is 0 is then judged (Step S64). In the case where m has been judged to be 0 (Step S64; YES), the image selection unit 15-2 selects the R grayscale image Ar for the region starting from the pixel 1 at one end of the pixel row to the pixel n (Step S65). Thereafter, r is assigned to f (Step S66), and n is assigned to m (Step S67).

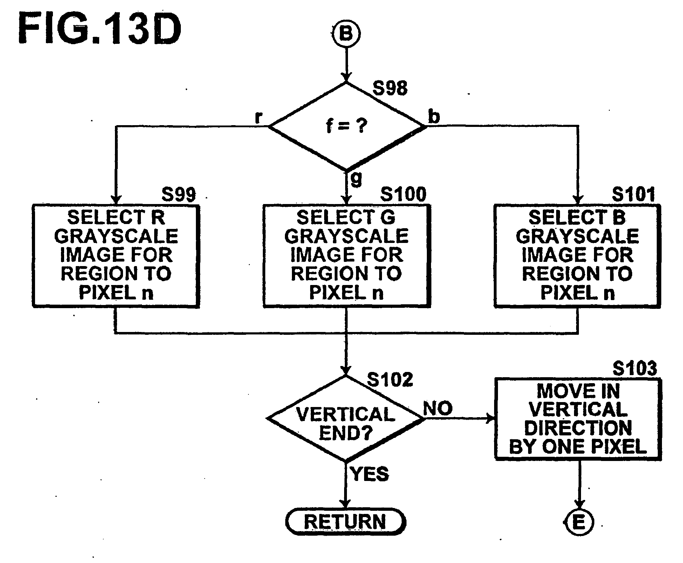

Whether the pixel n is at a horizontal end is then judged (Step S68). In the case where the pixel n has been judged not to be at a horizontal end (Step S68; NO), the processing target is moved in the horizontal direction by one pixel (Step S69). The flow of processing then returns to Step S62. In the case where the pixel n has been judged to be at a horizontal end (Step S68; YES), the flow of processing goes to Step S98 in Figure 13D, and the processing from Step S98 is carried out. ,

In the case where m has been judged not to be 0 at Step S64 (Step 564; NO), judgment is made regarding f (Step S7.0). In the case where f has been judged to be r (Step S70; r), the image selection unit 15-2 selects the R grayscale image Ar in the region to the pixel (n-m)/2 (Step S71). In the case where f has been judged to be g (Step S70; g), the image selection unit 15-2 selects the G grayscale image Ag in the region to the pixel (n-m)/2 (Step S72). In the case where f has been judged to be b (Step S70; b), the image selection unit 15-2 selects the B grayscale image Ab in the region to the pixel (n-m)/2 (Step S73). The flow of processing then returns to Step S66. At this time, decimals of (n-m)/2 is rounded up or down so that the number (n-m)/2 becomes an integer.

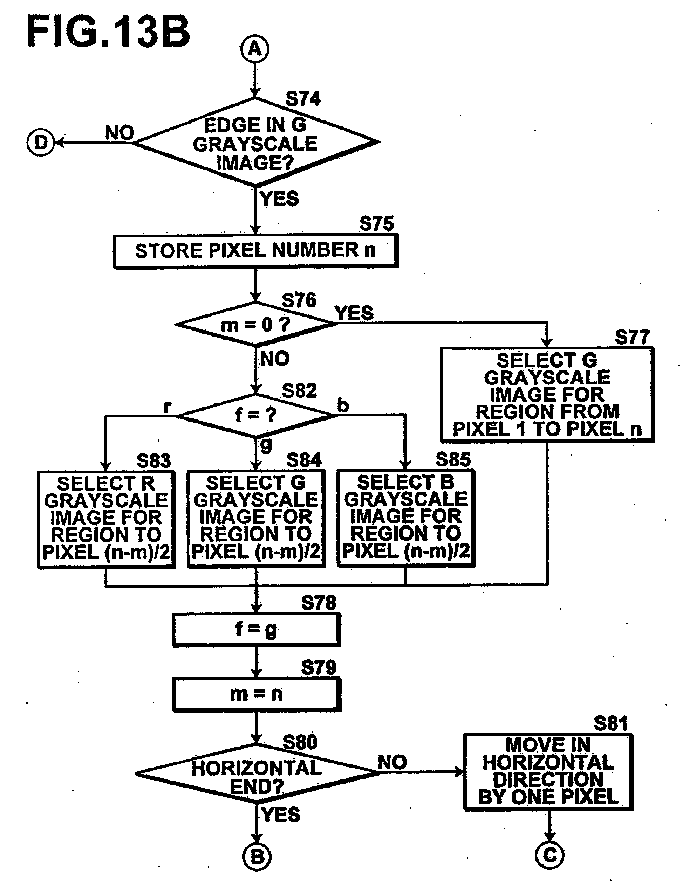

In the case where the R grayscale image Ar has been judged to have no edge at Step S62 (Step S62; NO), whether the G grayscale image Ag has an edge is then judged, as shown in Figure 13B (Step S74). In the case where the G grayscale image has been judged to have an edge, (Step S74; YES), the number n of the pixel is stored (Step S75).

Whether m is 0 is then judged (Step S76). In the case where m has been judged to be 0 (Step S76; YES), the image selection unit 15-2 selects the G grayscale image Ag for the region starting from the pixel 1 to the pixel n (Step S77). Thereafter, g is assigned to f (Step S78). The processing from Step S79 to Step S81 in Figure 13B is the same as the processing from Step S67 to Step S69 in Figure 13A. Furthermore, the processing from Step S82 to Step S85 in Figure 13B is the same as the processing from Step S70 to Step S73 in Figure 13A. Therefore, description of the processing will be omitted here.

After the image selection unit 15-2 selects the corresponding grayscale image at any one of Steps S83 to S85 in Figure 13B, the flow of processing goes to Step S78.

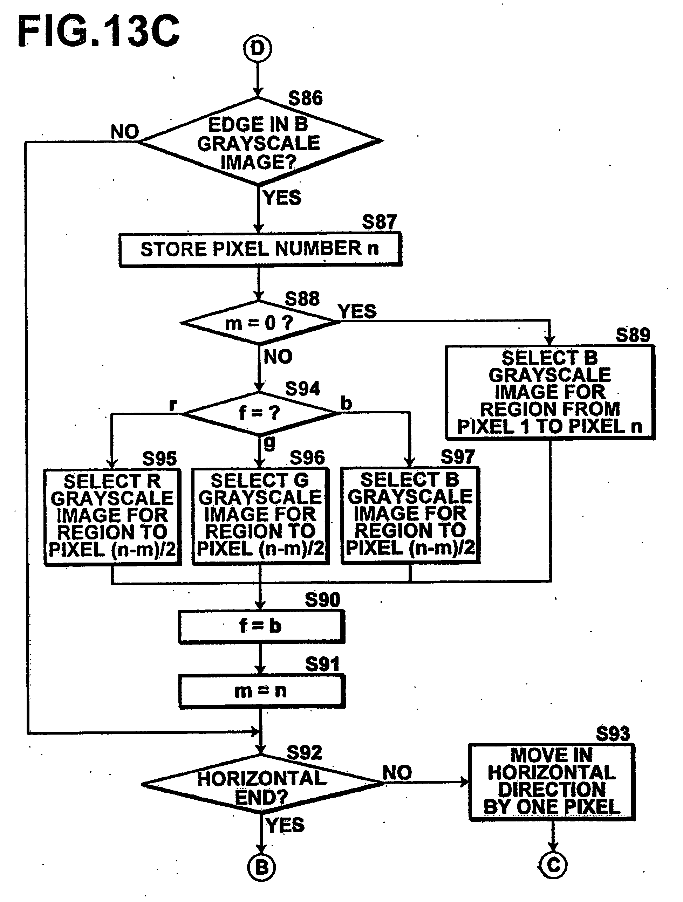

In the case where the G grayscale image Ag has been judged to have no edge at Step S74 (Step S74; NO), whether the B grayscale image Ab has an edge is then judged, as shown in Figure 13C (Step S86). In the case where the B grayscale image has been judged to have an edge, (Step S86; YES), the number n of the pixel is stored (Step S87).

Whether m is 0 is then judged (Step S88). In the case where m has been judged to be 0 (Step S88; YES), the image selection unit 15-2 selects the B grayscale image Ab for the region starting from the pixel 1 to the pixel n (Step S89). Thereafter, b is assigned to f (Step S90). The processing from Step S91 to Step S93 in Figure 13C is the same as the processing from Step S67 to Step S69 in Figure 13A. Furthermore, the processing from Step S94 to Step S97 in Figure 13C is the same as the processing from Step S70 to Step S73 in Figure 13A. Therefore, description of the processing will be omitted here.

After the image selection unit 15-2 selects the corresponding grayscale image at any one of Steps S95 to S97 in Figure 13C, the flow of processing goes to Step S90.

In the case where the processing target pixel has been judged to be at a horizontal end at Steps S68, S80 and S92 (Step S68, Step S80, Step S92; YES), the flow of processing goes to Step S98 where judgment is made regarding f, as shown in Figure 13D (Step S98). In the case where f has been judged to be r (Step S98; r), the image selection unit 15-2 selects the R grayscale image Ar in the region to the pixel n (Step S99). In the case where f has been judged to be g (Step S98; g), the image selection unit 15-2 selects the G grayscale image Ag in the region to the pixel n (Step S100). In the case where f has been judged to be b (Step S98; b), the image selection unit 15-2 selects the B grayscale image Ab in the region to the pixel n (Step S101). The flow of processing then goes to Step S102. At this time, decimals of (n-m)/2 is rounded up or down so that the number (n-m)/2 becomes an integer.

Whether the processing target pixel is at a vertical end is then judged (Step S102). In the case where the target pixel has been judged not to be at a vertical end (Step S102; NO), the target of processing is moved in the vertical direction by one pixel (Step S103). The flow of processing then goes to Step S61 in Figure 13A, and the processing from Step S61 is repeated. In the case where the target pixel has been judged to be located at a vertical end (Step S102; YES), the region division and image selection processing 1 is ended to go to Step S54 in Figure 12.

More specifically, assume a pixel row shown by each one-dot chain line in the grayscale images of Figure 14. In the case where judgment as to whether an edge exists is carried out horizontally at each pixel in the row in each of the grayscale images Ar, Ag, and Ab, an edge is detected at a pixel number A in the R grayscale image Ar. Therefore, the R grayscale image Ar is selected for the region starting from the pixel 1 to the pixel A. Thereafter, an edge is detected at a location of pixel number B in the G grayscale image Ag. Therefore, a region boundary is judged to be located at either the left or right of a midpoint (B-A)/2 between the pixel number B and the pixel number A where the previous edge has been detected. Consequently, the grayscale image Ar is selected for the region to the boundary.

Likewise, the grayscale image Ag is selected for a region to a boundary at either the left or right of pixel number (D-C)/2. In the case where the processing target hits a horizontal end, the grayscale image Ab is selected for a remaining region. The processing described above is carried out for all the pixel rows.

Generally speaking, corresponding points tend to be easily detected near an edge, and a possibility of improvement in accuracy of corresponding point detection, that is, accuracy of the subject becomes higher there. Consequently, by selecting the grayscale image of the colour wherein an edge has been detected for each of the regions including the pixel representing the extracted edge in the above manner, the grayscale image of the colour to be selected can be changed for each of the regions divided according to the photographed subject. Therefore, the distance data can be obtained with high accuracy.

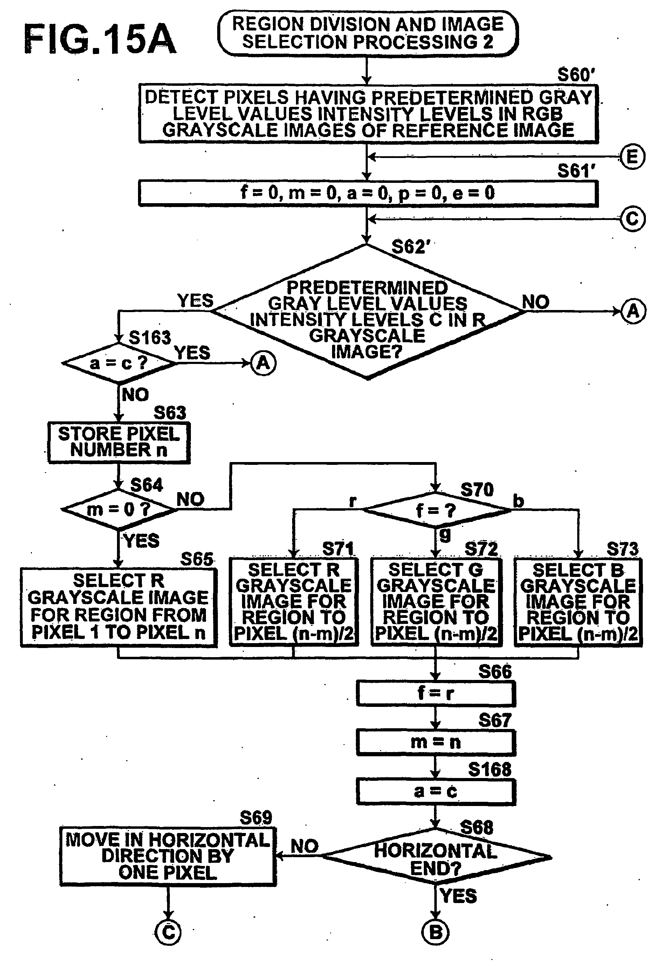

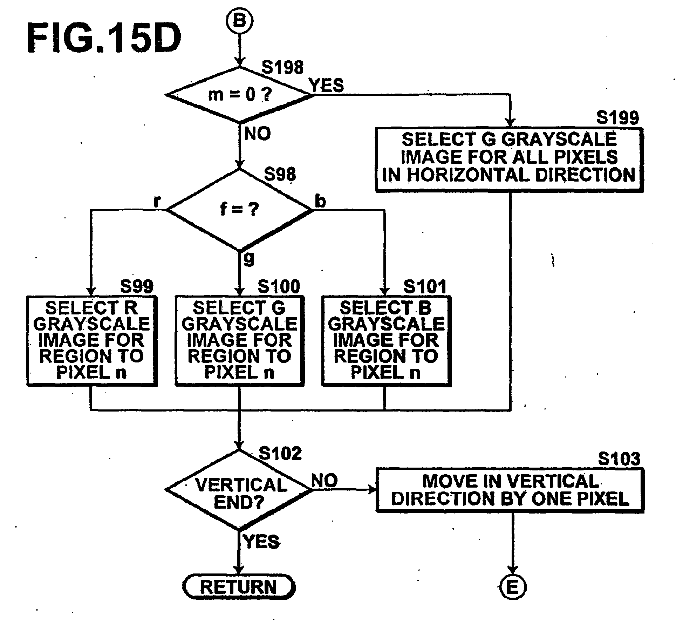

Second region division and image selection processing 2 by the region division unit 22 and the image selection unit 15-2 will be described next. Figures 15A to 15D are flow charts of the second region division and image selection processing 2. In Figures 15A to 15D, the same processing as in the flow charts in Figures 13A to 13D has the same step numbers, and only steps that are different from Figures 13A to 13D will be described in detail.

Unlike the region division and image selection processing 1, the region division unit 22 and the image selection unit 15 detect pixels having predetermined intensity levels C at predetermined intervals such as every 10 values (for example, L10, L20, L30, and so on) in each of the R, G, and B grayscale images Ar, Ag, and Ab constituting the reference image A, as shown in Figure 15A (Step S60'). Thereafter, 0 is assigned to each of f, m, a, p, and e for initialization thereof (Step S61'). The region division unit 22 judges whether any one of the predetermined intensity levels C appears at each of the pixels in each of the pixel rows (or columns), in order of the grayscale images Ar, Ag, and Ab, for example. More specifically, as shown in Figure 15A, whether any one of the predetermined intensity levels C exists is firstly judged in the R grayscale image Ar (Step S62').

In the case where any one of the predetermined intensity levels C has been judged to exist therein (Step S62'; YES), whether a is c is judged (Step S163). In the case where a has been judged not to be c (Step S163; NO), the flow of processing goes to Step S63, and c is assigned to a (Step S168) after the processing from S63 to S67 has been carried out as in Figure 13A. The flow of processing then goes to Step S68.

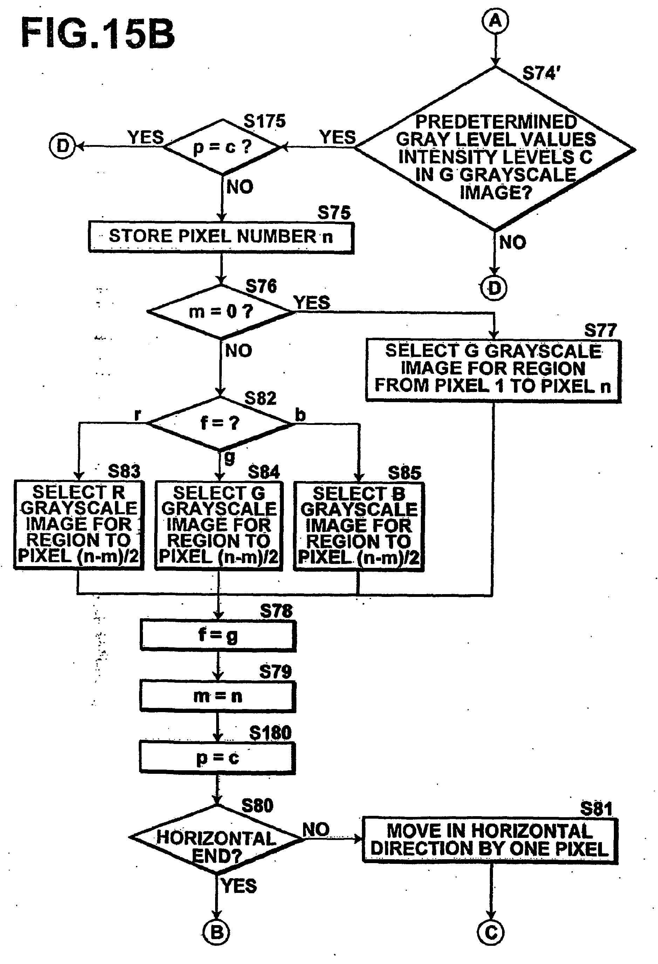

In the case where a has been judged to be c at Step S163 (Step S163; YES), and in the case where none of the predetermined intensity levels C has been judged to exist at Step S62' (Step S62'; NO), judgment is carried out as to whether the G grayscale image Ag has any one of the predetermined intensity levels C, as shown in Figure 15B (Step S74').

In the case where any one of the predetermined intensity levels C has been judged to exist (Step S74'; YES), whether p = c is judged (Step S175). In the case where p has been judged not to be c (Step S175; NO), the flow of processing goes to Step S.75. After the processing from Step S75 to Step S79 has been carried out as in Figure 13B, c is assigned to p (Step S180). The flow of processing then goes to Step S80.

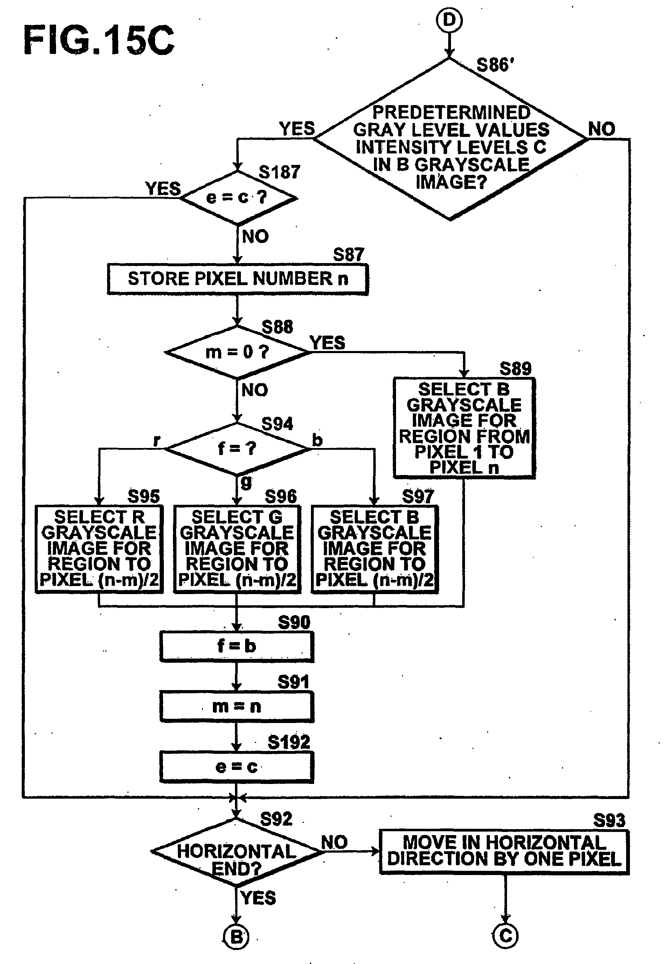

In the case where p has been judged to be c at Step S175 (Step S175; YES), and in the case where none of the predetermined intensity levels C has been judged to exist at Step S74' (Step S74'; NO), whether any one of the predetermined intensity levels C exists is judged in the B grayscale image Ab as shown in Figure 15C (Step S86').

In the case where any one of the predetermined intensity levels C has been judged to exist (Step S86'; YES), judgment is made as to whether e = c (Step S187). In the case where e has been judged not to be c (Step S187; NO), the flow of processing goes to Step S87. After the processing from Step S87 to Step S91 has been carried out as in Figure 13C, c is assigned to e (Step S192). The flow of processing goes to Step S92.

In the case where e has been judged to be c at Step S187 (Step S187; YES), and in the case where none of the predetermined intensity levels C has been judged to exist at Step 586' (Step S86'; NO), the flow of processing goes to Step S92 as shown in Figure 15C.

In the case where the processing target pixel has been judged to be at a horizontal end at any one of Steps S68, S80, and S92 (Step S68, Step S80, Step S92; YES), whether m is 0 is judged (Step S198). In the case where m has been judged to be 0 (Step S198; YES), the G grayscale image Ag is selected for all the pixels in the pixel row (Step S199), and the flow of processing goes to Step S102. At this time, the R grayscale image Ar or the B grayscale image Ab may be selected for all the pixels in the pixel row.

In the case where m has been judged not to be 0 at Step S198 (Step S198; NO), the flow of processing goes to Step S98. The processing from Step S98 to Step S103 is then carried out as in Figure 13D. The second region division and image selection 2 is carried out in this manner.

A grayscale image with frequent change in intensity levels generally has a higher possibility of having a characteristic that is necessary for distance calculation than a grayscale image with little change in intensity levels. In other words, corresponding points of an edge or a region having a large intensity level gradient used for distance calculation are points at which intensity levels fluctuate. Therefore, a grayscale image having frequent change in intensity levels has a higher possibility of having intensity level distribution of more corresponding points that are detectable. Consequently, by selecting the grayscale image having frequent change in the intensity levels for each of the regions in the above manner, accuracy of detecting the corresponding points, that is, accuracy of the subject can be improved, and the distance data can be obtained with high accuracy.

Thereafter, the image selection unit 15-2 selects the grayscale image of one of the colours for each of the regions divided by the region division unit 22 as shown in Figure 12 (Step S53), and the distance calculation unit 16 calculates the distance to each part of the subject based on the grayscale image of the colour selected in each of the regions by the image selection unit 15-2 from the grayscale images of the reference image A and the corresponding grayscale image of the matching image B, as has been described above (Step S54).

Once the distance calculation unit 16 has obtained the distance data by calculation of the distance (Step S54), the data compression unit 17 compresses the calculated distance data, and the media control unit 18 records the compressed distance data in the recording medium 19 (Step S55) to end the image processing by the image processing apparatus 1-2.

As has been described above, according to the image processing apparatus 1-2 in this embodiment, each of the R, G, and B grayscale images Ar, Ag, and Ab of the reference image A represented by one of the image data sets inputted as the pair is divided into the predetermined regions, and the grayscale image of the colour that is most appropriate for the distance calculation is selected for each of the predetermined regions in the grayscale images Ar, Ag, and Ab. The distance is then calculated for each of the predetermined regions from the grayscale image of the selected colour and the corresponding grayscale image of the colour of (the matching image B. Therefore, by calculating the distance based on only the grayscale images of the colour that is most appropriate for the distance calculation in each of the predetermined regions, the distance data can be calculated with high accuracy, and the time necessary for the calculation can be shortened. At this time, if only reduction in the time necessary for the calculation is sought,-the grayscale image of the colour that is most appropriate therefor does not need to be selected.

In this embodiment, the region division unit 22 carries out the region division only in the reference image A, and the image selection unit 15-2 carries out the grayscale image selection for each of the divided regions. However, the present invention is not necessarily limited thereto, and the region division and the grayscale image selection may be carried out on the matching image B or on both the reference image A and the matching image B.

In this embodiment, the colour images are images each comprising the grayscale images of R, G, and B colours. However, the present invention is not necessarily limited thereto, and can be applied to colour images each comprising grayscale images of a plurality of colours such as 4 colours.

The image processing apparatus of the present invention is an image processing apparatus that generates a stereo image data set by calculating a distance to a subject according to a pair of image data sets each comprising grayscale images of a plurality of colours and obtained by photographing the subject from two viewpoints, and the apparatus comprises:
image input means for inputting the pair of image data sets;
region division means for dividing into predetermined regions the grayscale images of the colours constituting at least one of the image data sets in the inputted pair of image data sets;
selection means for selecting the grayscale image or images of at least one of the colours as a portion of the grayscale images of the plurality of colours, for each of the predetermined regions divided by the region division means; and
distance calculation means for calculating the distance from the grayscale image or images of the colour or colours selected by the selection means and the grayscale image or images of the colour or colours in the other image data set.

An image processing apparatus 1-3 as a third embodiment of the present invention will be described below, with reference to the accompanying drawings.

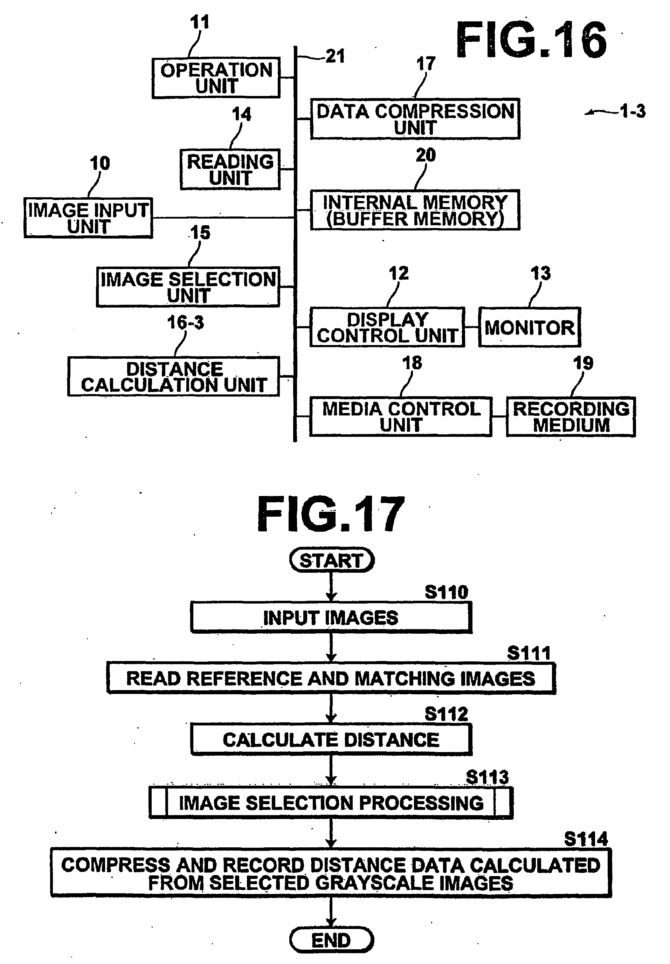

Figure 16 is a block diagram showing the functional configuration of the image processing apparatus 1-3 in the third embodiment. In Figure 16, the same units as in Figure 1, which is the block diagram of the functional configuration of the image processing 1 in the first embodiment, have the same reference numerals, and detailed description thereof will be omitted here. Only a difference from the first embodiment will be described below in detail.

As shown in Figure 16, the image processing apparatus 1-3 in this embodiment has a distance calculation unit 16-3, which is the difference from the first embodiment. The distance calculation unit 16-3 calculates the distance to each part of the subject for all the pixels in the R, G, and B grayscale images of the reference image A and the matching image B read by the reading unit 14. Although the distance calculation unit 16-3 in this embodiment calculates the distance for all the pixels, the pixels may be thinned and the distance calculation may be carried out only in a region. The configuration of the image processing apparatus 1-3 in this embodiment has been described above. The image processing by the image processing apparatus 1-3 will be described next. Figure 17 is a flow chart showing a flow of the image processing by the image processing apparatus 1-3.

As shown in Figure 17, the image input unit 10 in the image processing apparatus 1-3 inputs the pair of image data sets of the reference image A and the matching image B (Step S110), and the reading unit 14 reads the R, G, and B grayscale images Ar, Ag, and Ab of the reference image A as well as the R, G, and B grayscale images Br, Bg, and Bb of the matching image B, to read the pixel values as the intensity levels thereof (Step S111).

Regarding all the pixels, the distance calculation unit 16-3 calculates the distance to each part of the subject, based on a pair of the R grayscale images Ar and Br, a pair of the G grayscale images Ag and Bg, and a pair of the B grayscale images Ab and Bb of the reference image A and the matching image B (Step S112).

The image selection unit 15 then carries out image selection processing for selecting the grayscale image of one of the colours that is most appropriate for the distance calculation by the distance calculation unit 16-3, from the R, G, and B grayscale images Ar, Ag, and Ab of the reference image A (step 5113). The image selection processing by the image selection unit 15 may be the image selection processing 1, the image selection processing 2, the image selection processing 3, or the image selection processing 4 carried out in the image processing apparatus 1 in the first embodiment. Therefore, detailed description thereof will be omitted.

After the grayscale image of one of the colours has been selected from the grayscale images Ar, Ag, and Ab by the image selection unit 15 (Step S113), the data compression unit 17 compresses the distance data calculated from the grayscale images of the reference image A and the matching image B corresponding to the selected colour, and the media control unit 18 records the compressed distance data in the recording medium 19 (Step S114). In this manner, the image processing by the image processing apparatus 1-3 ends.

As has been described above, according to the image processing apparatus 1-3 in this embodiment, the reference image A and the matching image B are inputted, and the distance is calculated for all the pixels in the reference image A and in the matching image B. The grayscale image of one of the colours that is most appropriate for distance calculation is then selected from the grayscale images Ar, Ag and Ab of the reference image A, and the distance data calculated from the pair of grayscale images of the selected colour are recorded. Therefore, by recording the distance data calculated from the grayscale images of the colour that is most appropriate for the distance calculation, the distance data can be obtained with high accuracy.

In this embodiment, the image selection unit 15 selects the grayscale image regarding the reference image A alone. However, the present invention is not necessarily limited thereto, and the selection may be carried out regarding the matching image B or both the reference image A and the matching image B.

In this embodiment, the colour images are images each comprising the grayscale images of R, G, and B colours. However, the present invention is not necessarily limited thereto, and can be applied to colour images each comprising grayscale images of a plurality of colours such as 4 colours.

The image processing apparatus of the present invention is an image processing apparatus that generates a stereo image data set by calculating a distance to a subject according to a pair of image data sets each comprising grayscale images of a plurality of colours and obtained by photographing the subject from two viewpoints, and the apparatus comprises:
image input means for inputting the pair of image data sets;
distance calculation means for calculating the distance at a plurality of pixels in each of the grayscale images of the colours in the inputted pair of image data sets;
selection means for selecting the grayscale image or images of at least one of the colours as a portion of the grayscale images of the plurality of colours constituting at least one of the inputted image data sets; and
recording means for recording the distance data calculated by the distance calculation means in the grayscale image or images of the colour or colours selected by the selection means.

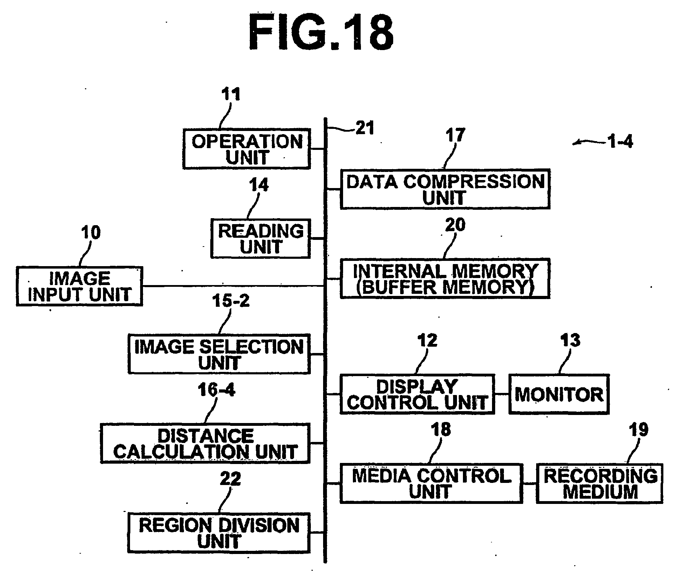

An image processing apparatus 1-4 as a fourth embodiment of the present invention will be described next with reference to the accompanying drawings. Figure 18 is a block diagram showing the functional configuration of the image processing apparatus 1-4 in the fourth embodiment. In Figure 18, the same units as in the block diagram in Figure 11, which is the block diagram showing the functional configuration of the image processing apparatus 1-2 in the second embodiment, have the same reference numerals, and description thereof will be omitted. Only a difference from the second embodiment will be described below in detail.

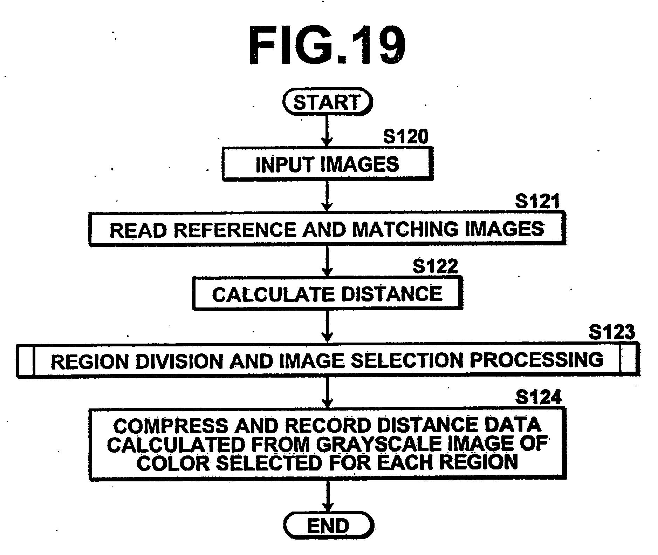

The image processing apparatus 1-4 in this embodiment has a distance calculation unit 16-4 as shown in Figure 18, which is the difference from the second embodiment. The distance calculation unit 16-4 calculates the distance to each part of the subject for all the pixels in the R, G, and B grayscale images of the reference image A and in the matching image B read by the reading unit 14. Although the distance calculation unit 16-4 in this embodiment calculates the distance for all the pixels, the pixels may be thinned and the distance calculation may be carried out only in a region. The configuration of the image processing apparatus 1-4 in this embodiment has been described above. The image processing by the image processing apparatus 1-4 will be described next. Figure 19 is a flow chart showing a-flow of image processing by the image processing apparatus 1-4.

As shown in Figure 19, the image input unit 10 in the image processing apparatus 1-4 inputs the pair of image data sets of the reference image A and the matching image B (Step S120), and the reading unit 14 reads the R, G, and B grayscale images Ar, Ag, and Ab of the reference image A as well as the R, G, and B grayscale images Br, Bg, and Bb of the matching image B, to read the pixel values as the intensity levels thereof (Step S121).

Regarding all the pixels, the distance calculation unit 16-4 calculates the distance to each part of the subject, based on the pair of the R grayscale images Ar and Br, the pair of the G grayscale images Ag and Bg, and the pair of the B grayscale images Ab and Bb of the reference image A and the matching image B (Step S122).

The region division and image selection processing is then carried out wherein the region division unit 22 divides each of the R, G, and B grayscale images Ar, Ag, and Ab of the reference image A into a plurality of predetermined regions and the image selection unit 15-2 selects for each of the divided regions the grayscale image of one of the colours that is most appropriate for distance calculation from the grayscale images Ar, Ag, and Ab (steps S123). The region division and image selection processing by the region division unit 22 and the image selection unit 15-2 may be the same as the region division and image selection processing 1 or 2 carried out in the image processing apparatus 1-2 in the second embodiment, and detailed description thereof will be omitted.

After the image selection unit 15-2 selects one of the grayscale images Ar, Ag, and Ab of the reference image A for each of the predetermined regions (Step S123), the data compression unit 17 compresses the distance data calculated from the grayscale images of the selected colour of the reference image A and the matching image B, and the media control unit 18 records the compressed distance data in the recording medium 19 (Step S124). The image processing by the image processing apparatus 1-4 ends in this manner.

As has been described above, according to the image processing apparatus 1-4 in this embodiment, the reference image A and the matching image B are inputted, and the distance is calculated for all the pixels in the reference image A and in the matching image B. The R, G, and B grayscale images Ar, Ag, and Ab of the reference image A are then divided into the plurality of predetermined regions, and the grayscale image of the colour that is most appropriate for distance calculation is selected for each of the divided regions. The distance data calculated from the pair of grayscale images of the selected colour are thus recorded. Therefore, by recording the distance data calculated from the grayscale images corresponding to the colour that is most appropriate for distance calculation for each of the predetermined regions, the distance data can be obtained with high accuracy.

The image selection unit 15-2 in this embodiment carries out the grayscale image selection regarding the reference image A. However, the present invention is not necessarily limited thereto, and the selection may be carried out on the matching image B or both the reference image A and the matching image B.

In this embodiment, the colour images are images each comprising the grayscale images of R, G, and B colours. However, the present invention is not necessarily limited thereto, and can be applied to colour images each comprising grayscale images of a plurality of colours such as 4 colours.

The image processing apparatus of the present invention is an image processing apparatus that generates a stereo image data set by calculating a distance to a subject according to a pair of image data sets each comprising grayscale images of a plurality of colours and obtained by photographing the subject from two viewpoints, and the apparatus comprises:
image input means for inputting the pair of image data sets;
distance calculation means for calculating the distance at a plurality of pixels in each of the grayscale images of the colours in the inputted pair of image data sets;
region division means for dividing into predetermined regions the grayscale images of the colours constituting at least one of the image data sets in the inputted pair of image data sets;
selection means for selecting the grayscale image or images of at least one of the colours as a portion of the grayscale images of the plurality of colours, for each of the regions divided by the region division means; and
recording means for recording the distance data calculated by the distance calculation means in the grayscale image or images of the colour or colours selected by the selection means.

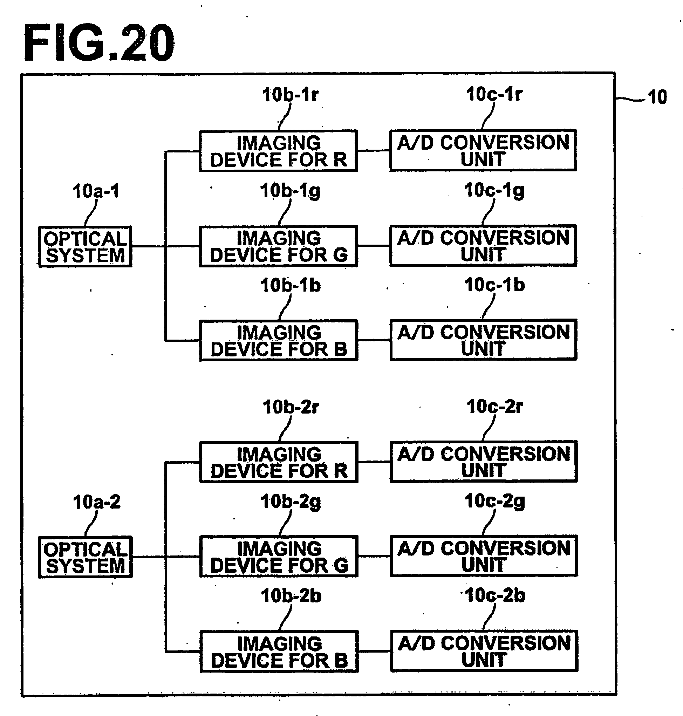

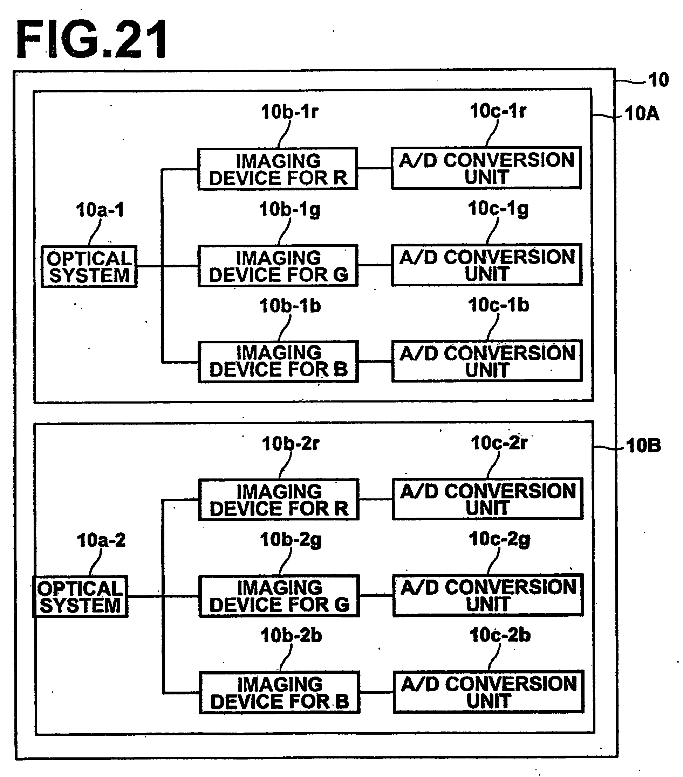

Examples of the configuration of the image input unit 10 in the above embodiments are shown in block diagrams in Figures 20 and 21. The image input unit 10 in the above embodiments inputs at least two sets of image data as parallax images photographed from different viewpoints. The image input unit 10 may input image data sets obtained by photography with a single camera whose viewpoint is changed sequentially, for example.

As shown in Figure 20, the image input unit 10 may be a multiple-lens camera 10 having at least two imaging systems, that is, at least two lenses at different viewpoints and comprising two optical systems 10a-1 and 10a-2 having photography lenses and the like, imaging devices such as CCDs comprising imaging devices 10b-1r and 10b-2r for R, imaging devices 10b-1g and 10b-2g for G, and imaging devices 10b-1b and 10b-2b for B, A/D conversion units 10c-1r and 10c-2r for R, A/D conversion units 10c-1g and 10c-2g for G, and A/D conversion units 10c-1b and 10c-2b for B. In this case, the imaging systems have a multiple-plane configuration. In this configuration, the two optical systems are used, and the imaging devices are positioned according to optical axes of the respective systems. A signal outputted from each of the devices is then subjected to signal processing to finally obtain one output signal of a photographed image from each of the system. In such a multiple-lens camera, the parallax images photographed at substantially the same time can be obtained.

Alternatively, as shown in Figure 21, the image input unit 10 may comprise two cameras 10A and 10B. Like the multiple-lens camera described above, the camera 10A has the optical system 10a-1, the imaging device 10b-1r for R, the imaging device 10b-1g for G, the imaging device 10b-1b for B, the A/D conversion unit 10c-1r for R, the A/D conversion unit 10c-1g for G, and the A/D conversion unit 10c-1b for B. Likewise, the camera 10B has the optical system 10a-2, the imaging device 10b-2r for R, the imaging device 10b-2g for G, the imaging device 10b-2b for B, the A/D conversion unit 10c-2r for R, the A/D conversion unit 10c-2g for G, and the A/D conversion unit 10c-2b for B. In this case, the cameras 10A and 10B are installed at positions where photography can be carried out from different viewpoints. The image input unit 10 may also comprise two or more cameras.

The image input unit 10 shown in Figure 20 or Figure 21 inputs the image data sets of the parallax images it obtained, at Step S1 in Figures 2, or at Step S51 in Figure 12, or at Step S110 in Figure 17, or at Step S120 in Figure 19.

The image processing apparatuses of the present invention are not necessarily limited to the image processing apparatuses described in the above embodiments, and the design thereof can be changed appropriately within the scope of the appended claims.

## Claims

1. An image processing apparatus that generates a stereo image data set by calculating a distance to a subject according to a pair of image data sets each comprising grayscale images of a plurality of colours and obtained by photographing the subject from two viewpoints, the apparatus comprising:
image input means (10) for inputting the pair of image data sets;
selection means (15) for selecting the grayscale image of one of the colours that is most appropriate for calculating the distance among the grayscale images of the plurality of colours constituting at least one of the inputted image data sets; and
distance calculation means (16) for calculating the distance, based on the grayscale image of the colour selected by the selection means and the grayscale image of the colour in the other image data set;
wherein the selection means (15) is adapted to select the most appropriate of the colors by calculating the number of pixels having predetermined intensity levels at predetermined intensity level intervals in each of the grayscale images of the colours and selects the grayscale image having a largest number of the pixels having been calculated, or the selection means (15) extracts an edge in each of the grayscale images of the colours, calculates the number of pixels of the extracted edge, and selects the grayscale image having a largest number of the pixels having been calculated.

2. The image processing apparatus according to Claim 1, wherein the selection means (15) calculates the number of the pixels in each pixel row or pixel column at predetermined intervals.

3. The image processing apparatus according to Claim 1, wherein the selection means (15) extracts an edge in each of the grayscale images of the colours, calculates how many times pixel rows or pixel columns at predetermined intervals intersect with the edge, and selects the grayscale image having a largest number of the times.

4. An image processing apparatus that generates a stereo image data set by calculating a distance to a subject according to a pair of image data sets each comprising grayscale images of a plurality of colours and obtained by photographing the subject from two viewpoints, the apparatus comprising:
image input means (10) for inputting the pair of image data sets;
distance calculation means (16-3) for calculating the distance, for a plurality of pixels of the plurality of colours within the pair of input image data sets;
selection means (15) for selecting the grayscale image of one of the colours of which distance data are to be recorded from among the grayscale images of the plurality of colours constituting at least one of the inputted image data sets; and
recording means (18, 19) for recording the distance data calculated by the distance calculation means (16-3) for the grayscale image of the colour selected by the selection means (15), wherein:
the selection means (15) calculates the number of pixels having predetermined intensity levels at predetermined intensity level intervals in each of the grayscale images of the colours and selects the grayscale image having a largest number of the pixels having been calculated, or the selection means (15) extracts an edge in each of the grayscale images of the colours, calculates the number of pixels of the extracted edge, and selects the grayscale image having a largest number of the pixels having been calculated.

5. An image processing apparatus that generates a stereo image data set by calculating a distance to a subject according to a pair of image data sets each comprising grayscale images of a plurality of colours and obtained by photographing the subject from two viewpoints, the apparatus comprising:
image input means (10) for inputting the pair of image data sets;
region division means (22) for dividing the grayscale images of the plurality of colours that constitute at least one of the pair of image data sets into a plurality of predetermined regions;
selection means (15-2) for selecting the grayscale image of one of the colours of which distance data are to be calculated, from among the grayscale images of the plurality of colours constituting at least one of the inputted image data sets, for each of the predetermined regions divided by the region division means (22);
distance calculation means (16) for calculating the distance, within the grayscale image of the colour selected by the selection means (15-2) and the grayscale image of the corresponding colour within the other of the pair of image data sets; and
recording means (18, 19) for recording the distance data calculated by the distance calculation means (16) for the grayscale image of the colour selected by the selection means (15-2);
the region division means (22) dividing the image data set by extracting edges or pixels having predetermined brightness values at predetermined intensity level intervals from within each of the grayscale images of the plurality of colours, and dividing the image data set into regions that include the extracted edges or the extracted pixels having the predetermined brightness values at the predetermined intervals; and
the selection means (15-2) selecting one of the colours of the grayscale image in which the edges or the pixels having the predetermined brightness values at the predetermined intervals have been extracted, for each of the predetermined regions.

6. An image processing apparatus that generates a stereo image data set by calculating a distance to a subject according to a pair of image data sets each comprising grayscale images of a plurality of colours and obtained by photographing the subject from two viewpoints, the apparatus comprising:
image input means (10) for inputting the pair of image data sets;
distance calculation means (16-4) for calculating the distance for the plurality of pixels of the plurality of colours within the input pair of image data sets;
region division means (22) for dividing the grayscale images of the plurality of colours that constitute at least one of the pair of image data sets into a plurality of predetermined regions;
selection means (15-2) for selecting the grayscale image of one of the colours of which distance data are to be recorded, from among the grayscale images of the plurality of colours constituting at least one of the input image data sets, for each of the predetermined regions divided by the region division means (22); and
recording means (18, 19), for recording the distance data calculated by the distance calculation means (16-4) for the grayscale image of the colour selected by the selection means (15-2);
the region division means (22) dividing the image data set by extracting edges or pixels having predetermined brightness values at predetermined intensity level intervals from within each of the grayscale images of the plurality of colours, and dividing the image data set into regions that include the extracted edges or the extracted pixels having the predetermined brightness values at the predetermined intervals; and
the selection means (15-2) selecting one of the colours of the grayscale image in which the edges or the pixels having the predetermined brightness values at the predetermined intervals have been extracted, for each of the predetermined regions.

7. An image processing method that generates a stereo image data set by calculating a distance to a subject according to a pair of image data sets each comprising grayscale images of a plurality of colours and obtained by photographing the subject from two viewpoints, the method comprising the steps of:
inputting (S1) the pair of image data sets;
selecting (S3) the grayscale image of one of the colours that is most appropriate for calculating the distance among the grayscale images of the plurality of colours constituting at least one of the inputted image data sets, by calculating the number of pixels having predetermined intensity levels at predetermined intensity level intervals in each of the grayscale images of the colours and selecting the grayscale image having a largest number of the pixels having been calculated, or extracting an edge in each of the grayscale images of the colours, calculating the number of pixels of the extracted edge, and selecting the grayscale image having a largest number of the pixels having been calculated; and
calculating (S4) the distance, based on the grayscale image of the selected colour and the grayscale image of the colour in the other image data set.

8. An image processing method as claimed in claim 7, wherein the method includes the additional step of extracting (S30) an edge in each of the grayscale images of the colours, calculating (S31) how many times pixel rows or pixel columns at predetermined intervals intersect with the edge, and selecting (S32) the grayscale image having a largest number of the times.

9. An image processing method that generates a stereo image data set by calculating a distance to a subject according to a pair of image data sets each comprising grayscale images of a plurality of colours and obtained by photographing the subject from two viewpoints, the method comprising the steps of:
inputting (S110) the pair of image data sets;
calculating (S112) the distance, for a plurality of pixels of the plurality of colours within the pair of input image data sets;
selecting (S113) the grayscale image of one of the colours of which distance data are to be recorded from among the grayscale images of the plurality of colours constituting at least one of the inputted image data sets; and
recording (S114) the distance data calculated by the distance calculation means for the grayscale image of the colour selected by the selection means, wherein:
the selecting step (S113) includes the substeps of calculating the number of pixels having predetermined intensity levels at predetermined intensity level intervals in each of the grayscale images of the colours and selecting the grayscale image having a largest number of the pixels having been calculated, or of extracting an edge in each of the grayscale images of the colours, calculating the number of pixels of the extracted edge, and selecting the grayscale image having a largest number of the pixels having been calculated.

10. An image processing method that generates a stereo image data set by calculating a distance to a subject according to a pair of image data sets each comprising grayscale images of a plurality of colours and obtained by photographing the subject from two viewpoints, the method comprising the steps of:
inputting (S51) the pair of image data sets;
dividing (S53) the grayscale images of the plurality of colours that constitute at least one of the pair of image data sets into a plurality of predetermined regions;
selecting (S53) the grayscale image of one of the colours of which distance data are to be calculated, from among the grayscale images of the plurality of colours constituting at least one of the inputted image data sets, for each of the predetermined regions divided by the region division means;
calculating (S54) the distance, within the grayscale image of the colour selected by the selection means and the grayscale image of the corresponding colour within the other of the pair of image data sets; and
recording (S55) the distance data calculated by the distance calculation means for the grayscale image of the colour selected by the selection means;
wherein the dividing step (S53) includes the substeps of dividing the image data set by extracting edges or pixels having predetermined brightness values at predetermined intensity level intervals from within each of the grayscale images of the plurality of colours, and dividing the image data set into regions that include the extracted edges or the extracted pixels having the predetermined brightness values at the predetermined intervals; and
the selecting step (S53) includes the substep of selecting one of the colours of the grayscale image in which the edges or the pixels having the predetermined brightness values at the predetermined intervals have been extracted, for each of the predetermined regions.

11. An image processing method that generates a stereo image data set by calculating a distance to a subject according to a pair of image data sets each comprising grayscale images of a plurality of colours and obtained by photographing the subject from two viewpoints, the method comprising the steps of:
inputting (S120) the pair of image data sets;
calculating (S122) the distance for the plurality of pixels of the plurality of colours within the input pair of image data sets;
dividing (S123) the grayscale images of the plurality of colours that constitute at least one of the pair of image data sets into a plurality of predetermined regions;
selecting (S123) the grayscale image of one of the colours of which distance data are to be recorded, from among the grayscale images of the plurality of colours constituting at least one of the input image data sets, for each of the predetermined regions divided by the region division means; and
recording (S124) the distance data calculated by the distance calculation means for the grayscale image of the colour selected by the selection means;
wherein the dividing step (S123) includes the substeps of dividing the image data set by extracting edges or pixels having predetermined brightness values at predetermined intensity level intervals from within each of the grayscale images of the plurality of colours, and dividing the image data set into regions that include the extracted edges or the extracted pixels having the predetermined brightness values at the predetermined intervals; and
the selecting step (S123) includes the substep of selecting one of the colours of the grayscale image in which the edges or the pixels having the predetermined brightness values at the predetermined intervals have been extracted, for each of the predetermined regions.

## Patentansprüche

1. Bildverarbeitungsvorrichtung, die einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei die Vorrichtung folgendes aufweist:
eine Bildeingabeeinrichtung (10) zum Eingeben des Paars von Bilddatensätzen;
eine Auswahleinrichtung (15) zum Auswählen des Grauskalenbilds von einer der Farben, die zum Berechnen des Abstands am besten geeignet ist, unter den wenigstens einen der eingegebenen Bilddatensätze bildenden Grauskalenbildern der Vielzahl von Farben;
eine Abstandsberechnungseinrichtung (16) zum Berechnen des Abstands basierend auf dem Grauskalenbild von der Farbe, das durch die Auswahleinrichtung ausgewählt ist, und dem Grauskalenbild der Farbe in dem anderen Bilddatensatz;
wobei die Auswahleinrichtung (15) dazu geeignet ist, die am besten geeignete der Farben durch Berechnen der Anzahl von Pixeln auszuwählen, die vorbestimmte Intensitätspegel in vorbestimmten Intensitätspegelintervallen in jedem der Grauskalenbilder der Farben haben, und das Grauskalenbild auswählt, das eine größte Anzahl der Pixel hat, die berechnet worden ist, oder die Auswahleinrichtung (15) einen Rand in jedem der Grauskalenbilder der Farben extrahiert, die Anzahl von Pixeln des extrahierten Rands berechnet und das Grauskalenbild auswählt, das eine größte Anzahl der Pixel hat, die berechnet worden ist.

2. Bildverarbeitungsvorrichtung nach Anspruch 1, wobei die Auswahleinrichtung (15) die Anzahl der Pixel in jeder Pixelzeile oder Pixelspalte in vorbestimmten Intervallen berechnet.

3. Bildverarbeitungsvorrichtung nach Anspruch 1, wobei die Auswahleinrichtung (15) einen Rand in jedem der Grauskalenbilder der Farben extrahiert, berechnet, wie viele Male sich Pixelzeilen oder Pixelspalten in vorbestimmten Intervallen mit dem Rand schneiden, und das Grauskalenbild auswählt, das eine größte Anzahl von Malen hat.

4. Bildverarbeitungsvorrichtung, die einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei die Vorrichtung folgendes aufweist:
eine Bildeingabeeinrichtung (10) zum Eingeben des Paars von Bilddatensätzen;
eine Abstandsberechnungseinrichtung (16-3) zum Berechnen des Abstands für eine Vielzahl von Pixeln der Vielzahl von Farben innerhalb des Paars von eingegebenen Bilddatensätzen;
eine Auswahleinrichtung (15) zum Auswählen des Grauskalenbilds von einer der Farben, von welchem Abstandsdaten aufzuzeichnen sind, unter den wenigstens einen der eingegebenen Bilddatensätze bildenden Grauskalenbildern der Vielzahl von Farben; und
eine Aufzeichnungseinrichtung (18, 19) zum Aufzeichnen der Abstandsdaten, die durch die Abstandsberechnungseinrichtung (16-3) für das Grauskalenbild von der Farbe, das durch die Auswahleinrichtung (15) ausgewählt ist, berechnet sind; wobei:
die Auswahleinrichtung (15) die Anzahl von Pixeln, die vorbestimmte Intensitätspegel in vorbestimmten Intensitätspegelintervallen haben, in jedem der Grauskalenbilder der Farben berechnet und das Grauskalenbild auswählt, das eine größte Anzahl der Pixel hat, die berechnet worden ist, oder die Auswahleinrichtung (15) einen Rand in jedem der Grauskalenbilder der Farben extrahiert, die Anzahl von Pixeln des extrahierten Rands berechnet und das Grauskalenbild auswählt, das eine größte Anzahl der Pixel hat, die berechnet worden ist.

5. Bildverarbeitungsvorrichtung, die einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei die Vorrichtung folgendes aufweist:
eine Bildeingabeeinrichtung (10) zum Eingeben des Paars von Bilddatensätzen;
eine Bereichsaufteilungseinrichtung (22) zum Aufteilen der wenigstens einen des Paars von Bilddatensätzen bildenden Grauskalenbilder der Vielzahl von Farben in eine Vielzahl von vorbestimmten Bereichen;
eine Auswahleinrichtung (15-2) zum Auswählen des Grauskalenbilds von einer der Farben, von welchem Abstandsdaten zu berechnen sind, unter den wenigstens einen der eingegebenen Bilddatensätze bildenden Grauskalenbildern der Vielzahl von Farben für jeden der durch die Bereichsaufteilungseinrichtung (22) aufgeteilten vorbestimmten Bereiche;
eine Abstandsberechnungseinrichtung (16) zum Berechnen des Abstands innerhalb des durch die Auswahleinrichtung (15-2) ausgewählten Grauskalenbilds von der Farbe und des Grauskalenbilds der entsprechenden Farbe innerhalb des anderen des Paars von Bilddatensätzen; und
eine Aufzeichnungseinrichtung (18, 19) zum Aufzeichnen der Abstandsdaten, die durch die Abstandsberechnungseinrichtung (16) für das Grauskalenbild der Farbe, das durch die Auswahleinrichtung (15-2) ausgewählt ist, berechnet sind;
wobei die Bereichsaufteilungseinrichtung (22) den Bilddatensatz durch Extrahieren von Rändern oder Pixeln, die vorbestimmte Helligkeitswerte in vorbestimmten Intensitätspegelintervallen haben, von innerhalb von jedem der Grauskalenbilder der Vielzahl von Farben aufteilt und den Bilddatensatz in Bereiche aufteilt, die die extrahierten Ränder oder die extrahierten Pixel enthalten, die die vorbestimmten Helligkeitswerte in den vorbestimmten Intervallen haben; und
wobei die Auswahleinrichtung (15-2) eine der Farben des Grauskalenbilds, in welchem die Ränder oder die Pixel, die die vorbestimmten Helligkeitswerte in den vorbestimmten Intervallen haben, extrahiert worden sind, für jeden der vorbestimmten Bereiche auswählt.

6. Bildverarbeitungsvörrichtung, die einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei die Vorrichtung folgendes aufweist:
eine Bildeingabeeinrichtung (10) zum Eingeben des Paars von Bilddatensätzen;
eine Abstandsberechnungseinrichtung (16-4) zum Berechnen des Abstands für eine Vielzahl von Pixeln der Vielzahl von Farben innerhalb des eingegebenen Paars von Bilddatensätzen;
eine Bereichsaufteilungseinrichtung (22) zum Aufteilen der Grauskalenbilder der Vielzahl von Farben, die wenigstens einen des Paars von Bilddatensätzen bilden, in eine Vielzahl von vorbestimmten Bereichen;
eine Auswahleinrichtung (15-2) zum Auswählen des Grauskalenbilds von einer der Farben, von welchem Abstandsdaten zu berechnen sind, unter den Grauskalenbildern der Vielzahl von Farben, die wenigstens einen der eingegebenen Bilddatensätze bilden, für jeden der durch die Bereichsaufteilungseinrichtung (22) aufgeteilten vorbestimmten Bereiche; und
eine Aufzeichnungseinrichtung (18, 19) zum Aufzeichnen der Abstandsdaten, die durch die Abstandsberechnungseinrichtung (16) für das Grauskalenbild von der Farbe, das durch die Auswahleinrichtung (15-2) ausgewählt ist, berechnet sind;
wobei die Bereichsaufteilungseinrichtung (22) den Bilddatensatz durch Extrahieren von Rändern oder Pixeln, die vorbestimmte Helligkeitswerte in vorbestimmten Intensitätspegelintervallen haben, von innerhalb von jedem der Grauskalenbilder der Vielzahl von Farben aufteilt und den Bilddatensatz in Bereiche aufteilt, die die extrahierten Ränder oder die extrahierten Pixel enthalten, die die vorbestimmten Helligkeitswerte in den vorbestimmten Intervallen haben; und
wobei die Auswahleinrichtung (15-2) eine der Farben des Grauskalenbilds, in welchem die Ränder oder die Pixel, die die vorbestimmten Helligkeitswerte in den vorbestimmten Intervallen haben, extrahiert worden sind, für jeden der vorbestimmten Bereiche auswählt.

7. Bildverarbeitungsverfahren, das einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei das Verfahren die folgenden Schritte aufweist:
Eingeben (S1) des Paars von Bilddatensätzen;
Auswählen (S3) des Grauskalenbilds von einer der Farben, die unter den wenigstens einen der eingegebenen Bilddatensätze bildenden Grauskalenbildern der Vielzahl von Farben zum Berechnen des Abstands am besten geeignet ist, durch Berechnen der Anzahl von Pixeln, die vorbestimmte Intensitätspegel in vorbestimmten Intensitätspegelintervallen in jedem der Grauskalenbilder der Farben haben, und Auswählen des Grauskalenbilds, das eine größte Anzahl der Pixel hat, die berechnet worden ist, oder Extrahieren eines Rands in jedem der Grauskalenbilder der Farben, Berechnen der Anzahl von Pixeln des extrahierten Rands und Auswählen des Grauskalenbilds, das eine größte Anzahl der Pixel hat, die berechnet worden ist; und
Berechnen (S4) des Abstands basierend auf dem Grauskalenbild der ausgewählten Farbe und dem Grauskalenbild der Farbe in dem anderen Bilddatensatz.

8. Bildverarbeitungsverfahren nach Anspruch 7, wobei das Verfahren den zusätzlichen Schritt zum Extrahieren (S30) eines Rands in jedem der Grauskalenbilder der Farben, zum Berechnen (S31), wie viele von Malen sich Pixelzeilen oder Pixelspalten in vorbestimmten Intervallen mit dem Rand schneiden, und zum Auswählen (S32) des Grauskalenbilds, das eine größte Anzahl von den Malen hat, enthält.

9. Bildverarbeitungsverfahren, das einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei das Verfahren die folgenden Schritte aufweist:
Eingeben (S110) des Paars von Bilddatensätzen;
Berechnen (S112) des Abstands für eine Vielzahl von Pixeln der Vielzahl von Farben innerhalb des Paars von eingegebenen Bilddatensätzen;
Auswählen (S113) des Grauskalenbilds von einer der Farben, von welchem Abstandsdaten aufzuzeichnen sind, unter den wenigstens einen der eingegebenen Bilddatensätze bildenden Grauskalenbildern der Vielzahl von Farben; und
Aufzeichnen (S114) der Abstandsdaten, die durch die Abstandsberechnungseinrichtung für das Grauskalenbild der durch die Auswahleinrichtung ausgewählten Farbe berechnet sind, wobei:
der Auswahlschritt (S113) die Unterschritte zum Berechnen der Anzahl von Pixeln, die vorbestimmte Intensitätspegel in vorbestimmten Intensitätspegelintervallen haben, in jedem der Grauskalenbilder der Farben und zum Auswählen des Grauskalenbilds, das die größte Anzahl der Pixel hat, die berechnet worden ist, oder zum Extrahieren eines Rands in jedem der Grauskalenbilder der Farben, zum Berechnen der Anzahl von Pixeln des extrahierten Rands und zum Auswählen des Grauskalenbilds, das eine größte Anzahl von Pixeln hat, die berechnet worden ist, enthält.

10. Bildverarbeitungsverfahren, das einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei das Verfahren die folgenden Schritte aufweist:
Eingeben (S51) des Paars von Bilddatensätzen;
Aufteilen (S53) der Grauskalenbilder der Vielzahl von Farben, die wenigstens eines des Paars von Bilddatensätzen bilden, in eine Vielzahl vorbestimmter Bereiche;
Auswählen (S53) des Grauskalenbilds von einer der Farben, von welchem Abstandsdaten zu berechnen sind, unter den wenigstens einen der eingegebenen Bilddatensätze bildenden Grauskalenbildern der Vielzahl von Farben für jeden der durch die Bereichsaufteilungseinrichtung aufgeteilten vorbestimmten Bereiche;
Berechnen (S54) des Abstands innerhalb des Grauskalenbilds der durch die Auswahleinrichtung ausgewählten Farbe und des Grauskatenbilds der entsprechenden Farbe innerhalb des anderen des Paars von Bilddatensätzen; und
Aufzeichnen (S55) der Abstandsdaten, die durch die Abstandsberechnungseinrichtung für das Grauskalenbild der durch die Auswahleinrichtung ausgewählten Farbe berechnet sind;
wobei der Aufteilungsschritt (S53) die Unterschritte zum Aufteilen des Bilddatensatzes durch Extrahieren von Rändern oder Pixeln, die vorbestimmte Helligkeitswerte in vorbestimmten Intensitätspegelintervallen haben, von innerhalb von jedem der Grauskalenbilder der Vielzahl von Farben und zum Aufteilen des Bilddatensatzes in Bereiche, die die extrahierten Ränder oder die extrahierten Pixel enthalten, die die vorbestimmten Helligkeitswerte in den vorbestimmten Intervallen haben, enthält; und
der Auswahlschritt (S53) den Unterschritt zum Auswählen von einer der Farben des Grauskalenbilds, in welchem die Ränder oder die Pixel, die die vorbestimmten Helligkeitswerte in den vorbestirnmten Intervallen haben, extrahiert worden sind, für jeden der vorbestimmten Bereiche enthält.

11. Bildverarbeitungsverfahren, das einen Stereobilddatensatz durch Berechnen eines Abstands zu einem Subjekt gemäß einem Paar von Bilddatensätzen erzeugt, die jeweils Grauskalenbilder einer Vielzahl von Farben aufweisen und durch Fotografieren des Subjekts von zwei Standpunkten aus erhalten sind, wobei das Verfahren die folgenden Schritte aufweist:
Eingeben (S120) des Paars von Bilddatensätzen;
Berechnen (S122) des Abstands der Vielzahl von Pixeln der Vielzahl von Farben innerhalb des eingegebenen Paars von Bilddatensätzen;
Aufteilen (S123) der Grauskalenbilder der Vielzahl von Farben, die wenigstens einen des Paars von Bilddatensätzen bilden, in eine Vielzahl von vorbestimmten Bereichen;
Auswählen (S123) des Grauskalenbilds von einer der Farben, von welchem Abstandsdaten aufzuzeichnen sind, unter den wenigstens einen der eingegebenen Bilddatensätze bildenden Grauskalenbildern der Vielzahl von Farben für jeden der durch die Bereichsaufteilungseinrichtung aufgeteilten vorbestimmten Bereiche; und
Aufzeichnen (124) der Abstandsdaten, die durch die Abstandsberechnungseinrichtung für das Grauskalenbild der durch die Auswahleinrichtung ausgewählten Farbe berechnet sind;
wobei der Aufteilungsschritt (S123) die Unterschritte zum Aufteilen des Bilddatensatzes durch Extrahieren von Rändern oder Pixeln, die vorbestimmte Helligkeitswerte in vorbestimmten Intensitätspegelintervallen haben, von innerhalb von jedem der Grauskalenbilder der Vielzahl von Farben und zum Aufteilen des Bilddatensatzes in Bereiche, die die extrahierten Ränder oder die extrahierten Pixel enthalten, die die vorbestimmten Helligkeitswerte in den vorbestimmten Intervallen haben, enthält; und
der Auswahlschritt (S123) den Unterschritt zum Auswählen von einer der Farben des Grauskalenbilds, in welchem die Ränder oder die Pixel, die die vorbestimmten Helligkeitswerte in den vorbestimmten Intervallen haben, extrahiert worden sind, für jeden der vorbestimmten Bereiche enthält.

## Revendications

1. Appareil de traitement d'images qui génère des ensembles de données d'image stéréo en calculant une distance par rapport à un sujet conformément à une paire d'ensembles de données d'image comportant chacun des images à échelle de gris d'une pluralité de couleurs et obtenus en photographiant le sujet à partir de deux points de vue, l'appareil comportant :
un moyen d'entrée d'images (10) pour entrer la paire d'ensembles de données d'image ;
un moyen de sélection (15) pour sélectionner l'image à échelle de gris de l'une des couleurs qui est la plus appropriée pour calculer la distance parmi les images à échelle de gris de la pluralité de couleurs constituant au moins l'un des ensembles de données d'image entrés ; et
un moyen de calcul de distance (16) pour calculer la distance, en fonction de l'image à échelle de gris de la couleur sélectionnée par le moyen de sélection et l'image à échelle de gris de la couleur dans l'autre ensemble de données d'image ;
dans lequel le moyen de sélection (15) est adapté pour sélectionner la plus appropriée des couleurs en calculant le nombre de pixels présentant des niveaux d'intensité prédéterminés à des intervalles de niveau d'intensité prédéterminé dans chacune des images à échelle de gris des couleurs et sélectionne l'image à échelle de gris présentant un très grand nombre de pixels calculés, ou le moyen de sélection (15) extrait un bord dans chacune des images à échelle de gris des couleurs, calcule le nombre de pixels du bord extrait, et sélectionne l'image à échelle de gris présentant un très grand nombre de pixels calculés.

2. Appareil de traitement d'images selon la revendication 1, dans lequel le moyen de sélection (15) calcule le nombre de pixels dans chaque rangée de pixels ou colonnes de pixels à des intervalles prédéterminés.

3. Appareil de traitement d'images selon la revendication 1, dans lequel le moyen de sélection (15) extrait un bord dans chacune des images à échelle de gris des couleurs, calcule combien de fois les rangées de pixels ou les rangées de colonnes à des intervalles prédéterminés entrecoupent le bord, et sélectionne l'image à échelle de gris présentant un très grand nombre de fois.

4. Appareil de traitement d'images qui génère un ensemble de données d'image stéréo en calculant une distance par rapport à un sujet conformément à une paire d'ensembles de données d'image comportant chacune des images à échelle de gris d'une pluralité de couleurs et obtenus en photographiant le sujet à partir de deux points de vue, l'appareil comportant :
un moyen d'entrée d'images (10) pour entrer la paire d'ensembles de données d'image ;
un moyen de calcul de distance (16-3) pour calculer la distance, pour une pluralité de pixels de la pluralité de couleurs à l'intérieur de la paire d'ensembles de données d'image entrés ;
un moyen de sélection (15) pour sélectionner l'image à échelle de gris de l'une des couleurs dont les données de distance doivent être enregistrées parmi les images à échelle de gris de la pluralité de couleurs constituant au moins l'un des ensembles de données d'image entrés ; et
un moyen d'enregistrement (18, 19) pour enregistrer les données de distance calculées par le moyen de calcul de distance (16-3) pour les images à échelle de gris de la couleur sélectionnée par le moyen de sélection (15), dans lequel :
le moyen de sélection (15) calcule le nombre de pixels présentant des niveaux d'intensité prédéterminés à des intervalles de niveau d'intensité prédéterminés dans chacune des images à échelle de gris des couleurs et sélectionne l'image à échelle de gris présentant un très grand nombre de pixels calculés, ou le moyen de sélection (15) extrait un bord dans chacune des images à échelle de gris des couleurs, calcule le nombre de pixels du bord extrait, et sélectionne l'image à échelle de gris présentant un très grand nombre de pixels calculés.

5. Appareil de traitement d'images qui génère un ensemble de données d'image stéréo en calculant une distance par rapport à un sujet conformément à une paire d'ensembles de données d'image chacun comportant des images à échelle de gris d'une pluralité de couleurs et obtenus en photographiant le sujet à partir de deux points de vue, l'appareil comportant :
un moyen d'entrée d'images (10) pour entrer la paire d'ensembles de données d'image ;
un moyen de division de région (22) pour diviser les images à échelle de gris de la pluralité de couleurs qui constituent au moins l'un de la paire d'ensembles de données d'image en une pluralité de régions prédéterminées ;
un moyen de sélection (15-2) pour sélectionner l'image à échelle de gris de l'une des couleurs dont les données de distance doivent être calculées, parmi les images à échelle de gris de la pluralité de couleurs constituant au moins l'un des ensembles de données d'image entrés, pour chacune des régions prédéterminées divisées par le moyen de division de région (22) ;
un moyen de calcul de distance (16) pour calculer la distance, à l'intérieur de l'image à échelle de gris de la couleur sélectionnée par le moyen de sélection (15-2) et l'image à échelle de gris de la couleur correspondant à l'intérieur de l'autre de la paire d'ensembles de données d'image ; et
un moyen d'enregistrement (18, 19) pour enregistrer les données de distance calculées par le moyen de calcul de distance (16) pour l'image à échelle de gris de la couleur sélectionnée par le moyen de sélection (15-2);
le moyen de division de région (22) divisant l'ensemble de données d'image en extrayant les bords ou les pixels présentant des valeurs de clarté prédéterminées à des intervalles de niveau d'intensité prédéterminés à l'intérieur de chacune des images à échelle de gris de la pluralité de couleurs, et en divisant l'ensemble de données d'image en régions qui comprennent les bords extraits ou les pixels extraits présentant des valeurs de clarté prédéterminées aux intervalles prédéterminés ; et
le moyen de sélection (15-2) sélectionnant l'une des couleurs de l'image à échelle de gris dans laquelle les bords ou les pixels présentant des valeurs de clarté prédéterminées aux intervalles prédéterminés ont été extraits, pour chacune des régions prédéterminées.

6. Appareil de traitement d'images qui génère un ensemble de données d'image stéréo en calculant une distance par rapport à un sujet conformément à une paire d'ensembles de données d'image comportant chacun des images à échelle de gris d'une pluralité de couleurs et obtenus en photographiant le sujet à partir de deux points de vue, l'appareil comportant :
un moyen d'entrée d'images (10) pour entrer la paire d'ensembles de données d'image ;
un moyen de calcul de distance (16-4) pour calculer la distance pour la pluralité de pixels de la pluralité de couleurs à l'intérieur de la paire entrée d'ensembles de données d'image ;
un moyen de division de région (22) pour diviser les images à échelle de gris de la pluralité de couleurs qui constituent au moins l'un de la paire d'ensembles de données d'image en une pluralité de régions prédéterminées ;
un moyen de sélection (15-2) pour sélectionner l'image à échelle de gris de l'une des couleurs dont les données de distance doivent être enregistrées, parmi les images à échelle de gris de la pluralité de couleurs constituant au moins l'un des ensembles de données d'image entrés, pour chacune des régions prédéterminées divisées par le moyen de division de région (22) ; et
un moyen d'enregistrement (18, 19), pour enregistrer les données de distance calculées par le moyen de calcul de distance (16-4) pour l'image à échelle de gris de la couleur sélectionnée par le moyen de sélection (15-2);
le moyen de division de région (22) divisant l'ensemble de données d'image en extrayant les bords ou les pixels présentant des valeurs de clarté prédéterminées à des intervalles de niveau d'intensité prédéterminés à l'intérieur de chacune des images à échelle de gris de la pluralité de couleurs, et en divisant l'ensemble de données d'image en régions qui comprennent les bords extraits ou les pixels extraits présentant les valeurs de clarté prédéterminées aux intervalles prédéterminés ; et
le moyen de sélection (15-2) sélectionnant l'une des couleurs de l'image à échelle de gris dans laquelle les bords ou les pixels présentant les valeurs de clarté prédéterminées aux intervalles prédéterminés ont été extraits, pour chacune des régions prédéterminées.

7. Procédé de traitement d'images qui génère un ensemble de données d'image stéréo en calculant une distance par rapport à un sujet conformément à une paire d'ensembles de données d'image comportant chacun des images à échelle de gris d'une pluralité de couleurs et obtenus en photographiant le sujet à partir de deux points de vue, le procédé comportant les étapes consistant à :
entrer (S1) la paire d'ensembles de données d'image ;
sélectionner (S3) l'image à échelle de gris de l'une des couleurs qui est la plus appropriée pour calculer la distance parmi les images à échelle de gris de la pluralité de couleurs constituant au moins l'un des ensembles de données d'image entrés, en calculant le nombre de pixels présentant des niveaux d'intensité prédéterminés à des intervalles de niveau d'intensité prédéterminés dans chacune des images à échelle de gris des couleurs et en sélectionnant l'image à échelle de gris présentant un très grand nombre de pixels calculés, ou en extrayant un bord dans chacune des images à échelle de gris des couleurs, en calculant le nombre de pixels du bord extrait, et en sélectionnant l'image à échelle de gris présentant un très grand nombre de pixels calculés ; et
calculer (S4) la distance, en fonction de l'image à échelle de gris de la couleur sélectionnée et de l'image à échelle de gris de la couleur dans l'autre ensemble de données d'image.

8. Procédé de traitement d'images selon la revendication 7, dans lequel le procédé comprend l'étape supplémentaire consistant à extraire (S30) un bord dans chacune des images à échelles de gris des couleurs, calculer (S31) combien de fois les rangées de pixels ou les colonnes de pixels aux intervalles prédéterminés coupent le bord, et sélectionner (S32) l'image à échelle de gris présentant un très grand nombre de fois.

9. Procédé de traitement d'images qui génère un ensemble de données d'image stéréo en calculant une distance par rapport à un sujet conformément à une paire d'ensembles de données d'image comportant chacun des images à échelle de gris d'une pluralité de couleurs et obtenus en photographiant le sujet à partir de deux points de vue, le procédé comportant les étapes consistant à :
entrer (S110) la paire d'ensembles de données d'image ;
calculer (S112) la distance, pour une pluralité de pixels de la pluralité de couleurs à l'intérieur de la paire d'ensembles de données d'image entrés ;
sélectionner (S113) l'image à échelle de gris de l'une des couleurs dont les données de distance doivent être enregistrées parmi les images à échelle de gris de la pluralité de couleurs constituant au moins l'un des ensembles de données d'image entrés ; et
enregistrer (S114) les données de distance calculées par le moyen de calcul de distance pour l'image à échelle de gris de la couleur sélectionnée par le moyen de sélection, dans lequel :
l'étape de sélection (S113) comprend les sous-étapes consistant à calculer le nombre de pixels présentant des niveaux d'intensité prédéterminés à des intervalles de niveau d'intensité prédéterminés dans chacune des images à échelle de gris des couleurs et sélectionner l'image à échelle de gris présentant un très grand nombre de pixels calculés, ou à extraire un bord dans chacune des images à échelle de gris des couleurs, calculer le nombre de pixels du bord extrait, et sélectionner l'image à échelle de gris présentant un très grand nombre de pixels calculés.

10. Procédé de traitement d'images qui génère un ensemble de données d'image stéréo en calculant une distance par rapport à un sujet conformément à une paire d'ensembles de données d'image comportant chacun des images à échelle de gris d'une pluralité de couleurs et obtenus en photographiant le sujet à partir de deux points de vue, le procédé comportant les étapes consistant à :
entrer (S51) la paire d'ensembles de données d'image ;
diviser (S53) les images à échelle de gris de la pluralité de couleurs qui constituent au moins l'un de la paire d'ensembles de données d'image en une pluralité de régions prédéterminées ;
sélectionner (S53) l'image à échelle de gris de l'une des couleurs dont les données de distance doivent être calculées, parmi les images à échelle de gris de la pluralité de couleurs constituant au moins l'un des ensembles de données d'image entrés, pour chacune des régions prédéterminées divisées par le moyen de division de région ;
calculer (S54) la distance, à l'intérieur de l'image à échelle de gris de la couleur sélectionnée par le moyen de sélection et l'image à échelle de gris de la couleur correspondante dans l'autre de la paire d'ensembles de données d'image ; et
enregistrer (S55) les données de distance calculées par le moyen de calcul de distance pour l'image à échelle de gris de la couleur sélectionnée par le moyen de sélection ;
dans lequel l'étape de division (S53) comprend les sous-étapes consistant à diviser l'ensemble de données d'image en extrayant les bords ou les pixels présentant des valeurs de clarté prédéterminées à des intervalles de niveau d'intensité prédéterminés à l'intérieur de chacune des images à échelle de gris de la pluralité de couleurs, et en divisant l'ensemble de données d'image en régions qui comprennent les bords extraits ou les pixels extraits présentant les valeurs de clarté prédéterminées aux intervalles prédéterminés ; et
l'étape de sélection (S53) comprend la sous-étape consistant à sélectionner l'une des couleurs de l'image à échelle de gris dans laquelle les bords ou les pixels présentant des valeurs de clarté prédéterminées aux intervalles prédéterminés ont été extraits, pour chacune des régions prédéterminées.

11. Procédé de traitement d'images qui génère un ensemble de données d'image stéréo en calculant une distance par rapport à un sujet conformément à une paire d'ensembles de données d'image comportant chacun des images à échelle de gris d'une pluralité de couleurs et obtenus en photographiant le sujet à partir de deux points de vue, le procédé comportant les étapes consistant à :
entrer (S120) la paire d'ensembles de données d'image ;
calculer (S122) la distance pour la pluralité de pixels de la pluralité de couleurs à l'intérieur de la paire entrée d'ensembles de données d'image ;
diviser (S123) les images à échelle de gris de la pluralité de couleurs qui constituent au moins l'une de la paire d'ensembles de données d'image en une pluralité de régions prédéterminées ;
sélectionner (S123) l'image à échelle de gris de l'une des couleurs dont les données de distance doivent être enregistrées, parmi les images à échelle de gris de la pluralité de couleurs constituant au moins l'un des ensembles de données d'image entrés, pour chacune des régions prédéterminées divisées par le moyen de division de région ; et
enregistrer (S124) les données de distance calculées par le moyen de calcul de distance pour l'image à échelle de gris de la couleur sélectionnée par le moyen de sélection ;
dans lequel l'étape de division (S123) comprend les sous-étapes consistant à diviser l'ensemble de données d'image en extrayant les bords ou les pixels présentant des valeurs de clarté prédéterminées à des intervalles de niveau d'intensité prédéterminés à l'intérieur de chacune des images à échelle de gris de la pluralité de couleurs, et diviser l'ensemble de données d'image en régions qui comprennent les bords extraits ou les pixels extraits présentant des valeurs de clarté prédéterminées aux intervalles prédéterminés ; et
l'étape de sélection (S123) comprend la sous-étape consistant à sélectionner l'une des couleurs de l'image à échelle de gris dans laquelle les bords ou les pixels présentant des valeurs de clarté prédéterminées aux intervalles prédéterminés ont été extraits, pour chacune des régions prédéterminées.
